# EUROPEAN PATENT SPECIFICATION

(11) **EP 4 280 055 B1**
(45) Date of publication and mention of the grant of the patent: **25.02.2026**
(21) Application number: 21924379.7
(22) Date of filing: 08.12.2021
(51) Int. Cl.: G06F 9/451, G06F 3/04842, G06F 3/04883, G09G 5/38, G09G 5/00

(54) **IMAGE DISPLAY METHOD, ELECTRONIC DEVICE, AND STORAGE MEDIUM**
BILDANZEIGEVERFAHREN, ELEKTRONISCHE VORRICHTUNG UND SPEICHERMEDIUM
PROCÉDÉ D'AFFICHAGE D'IMAGE, DISPOSITIF ÉLECTRONIQUE ET SUPPORT DE STOCKAGE

(30) Priority: 07.02.2021 CN 202110179798
(43) Date of publication of application: 22.11.2023
(73) Proprietor: Huawei Technologies Co., Ltd., Shenzhen, Guangdong 518129 (CN)
(72) Inventor: LIU, Zhiyuan, Shenzhen, Guangdong 518129 (CN); MA, Minggang, Shenzhen, Guangdong 518129 (CN)
(74) Representative: Isarpatent
(86) International application number: PCT/CN2021/136372
(87) International publication number: WO 2022/166386

(56) References cited:
- WO-A1-2014/073521
- CN-A- 105 868 235
- CN-A- 106 502 613
- CN-A- 107 608 606
- CN-A- 109 126 131
- CN-A- 109 388 726
- CN-A- 111 176 526
- CN-A- 111 586 237

## Description

Priority is claimed to Chinese Patent Application No. 202110179798.0, filed with the China National Intellectual Property Administration on February 7, 2021 and entitled "IMAGE DISPLAY METHOD, ELECTRONIC DEVICE, AND STORAGE MEDIUM",

### TECHNICAL FIELD

This disclosure generally relates to the field of computer technologies, and the invention in particular relates to an image display method, an electronic device, a computer-readable storage medium, and a computer program product.

### BACKGROUND

With the rapid development of computer technologies, more applications (APPs) come into being. Currently, it is available for many apps (for example, scrolling screenshot software, and scrolling screenshot stitching software) to generate long strip pictures. For example, the long strip pictures may be vertical long strip pictures. Because the long strip pictures can display some coherent information more completely, a user usually captures some long strip pictures in forms such as web pages and chat records.

However, for the foregoing long strip pictures, the user has poor experience when browsing the long strip pictures via an electronic device. For example, a television is usually a landscape-screen electronic device. When a long strip picture is browsed through the television, because a picture is usually displayed in a center, the user needs to continuously move the long strip picture up and down to complete browsing of the long strip picture, and the operation is complex.

CN 109 388 726 A relates to a picture display method, device, and apparatus and computer-readable medium. There is a judging step whether the ratio of a height and a width of the picture to be displayed is greater than a first threshold value to obtain a judging result. A display step of displaying a picture is according to the judgment result. While displaying the super-long picture in segments, the user can select the segment to be displayed. Power consumption of a terminal equipment is saved, memory occupation is reduced, and system performance is improved.

CN 106 502 613 A relates to another picture loading method and device. The method comprises the steps of obtaining an image resolution of a target picture and a display resolution of a display zone for displaying the target picture. Whether the image resolution is greater than the display resolution or not is judged. When the image resolution is greater than the display resolution, the target picture is divided into a plurality of segmentations. According to a preset display rule, the picture segmentations corresponding to the display range of the display zone are loaded to the display zone. Multiple picture segmentations are obtained by dividing the target picture with the image greater than the display resolution of the display zone. The picture segmentations corresponding to the display range of the display zone are loaded to the display zone according to the preset display rule. The picture segmentations located beyond the display range of the display zone are not loaded temporarily. Further, the consumption of system memory is reduced. The display quality of the pictures is ensured. The loading speed of the picture is improved, and the user experience is good.

CN 109 126 131 A relates to a game screen display method, storage medium and terminal. The method includes detecting the state of a mobile terminal. Displaying a current game picture on a screen of the mobile terminal when it is detected that the mobile terminal is in a horizontal screen state. When it is detected that the mobile terminal is switched to a vertical screen state, the current game screen is cut into the main game screen and secondary game screen. The main game screen is displayed on one of an upper half and lower half of the screen. The secondary game screen is displayed on the other of an upper half of and lower half of the screen. Further, the part of the current game picture beyond the screen is avoided cut off, the integrity of the current game picture is retained, and the user experience is improved.

CN 111 586 237 A relates to an image display method and electronic equipment. The method comprises: segmenting a target image according to the pixel size of a screen under the condition that the pixel size of the target image is greater than the pixel size of the screen of the electronic equipment, obtaining at least two images, and displaying the sub-images wherein the size of the sub-image is in a first proportion to the size of a screen of the electronic equipment. Further, an image with an overall length-width ratio is split into small images suitable for screen display. Hence, a display effect is improved, such that a user can read the image and the characters in the image without manually scaling. The user can read the image and the characters in the image in a page-turning mode like an electronic book, and use is convenient for the user. Hence, the problems that an image display scheme is poor in display effect for the image with a too large length-width ratio is addressed.

### SUMMARY

The object of the present invention is to provide an image display method, an electronic device, a computer-readable storage medium, and a computer program product to provide a manner for adaptive picture display. This object is solved by the attached independent claims, and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "... aspect according to an example", "the disclosure describes", or "the disclosure" describe technical teaching which relates to the understanding of the claimed invention or its embodiments.

According to a first aspect of the invention, the invention provides an image display method, applied to an electronic device, and includes:
obtaining a to-be-displayed image, and specifically, the to-be-displayed image may be obtained from an album of the electronic device, or may be obtained during browsing on a web page of the electronic device, where a source of the to-be-displayed image is not specially limited in this embodiment of this application;
identifying the to-be-displayed image, and determining a display type of the to-be-displayed image, specifically, the display type may include a long horizontal image and a long vertical image;
obtaining a screen status of the electronic device, and determining whether the screen status of the electronic device matches the display type of the to-be-displayed image, specifically, the screen status may include a landscape mode and a portrait mode, where the landscape mode of the electronic device may match the long horizontal image, that is, the long horizontal image may be normally displayed on the electronic device in the landscape mode, and the portrait mode of the electronic device may match the long vertical image, that is, the long vertical image may be normally displayed on the electronic device in the portrait mode; and
determining a display area based on a matching result; and if the screen status of the electronic device does not match the display type of the to-be-displayed image, segmenting the to-be-displayed image to obtain a plurality of sub-images, and displaying the plurality of sub-images in the display area.

In this embodiment of this application, a type of the to-be-displayed image and the screen status of the electronic device are determined, and when the type of the image does not match the screen status, the to-be-displayed image is segmented for display, thereby improving image display efficiency and improving user viewing experience.

According to the invention, the identifying the to-be-displayed image, and determining a display type of the to-be-displayed image includes:
obtaining an aspect ratio of the to-be-displayed image; comparing the aspect ratio of the to-be-displayed image with a preset first threshold and a preset second threshold, where the preset first threshold and the preset second threshold are determined based on screen resolution of the electronic device; and
if the aspect ratio of the to-be-displayed image is greater than or equal to the preset first threshold, determining that the display type of the to-be-displayed image is a long vertical image; or if the aspect ratio of the to-be-displayed image is less than or equal to the preset second threshold, determining that the display type of the to-be-displayed image is a long horizontal image.

In this embodiment of this application, the aspect ratio of the to-be-displayed image is compared with a preset aspect ratio, to determine the type of the image, so that a type of the to-be-displayed image can be effectively identified.

According to the invention, the screen status of the electronic device includes a landscape mode and a portrait mode, and the determining a display area based on a matching result includes:
if the screen status of the electronic device is the landscape mode, and the display type of the to-be-displayed image is the long vertical image; or if the screen status of the electronic device is the portrait mode, and the display type of the to-be-displayed image is the long horizontal image, determining that the screen status of the electronic device does not match the display type of the to-be-displayed image, determining that a screen of the electronic device is a first display area, and segmenting the first display area to obtain a plurality of sub-display areas; or
if the screen status of the electronic device is the landscape mode, and the display type of the to-be-displayed image is the long horizontal image; or if the screen status of the electronic device is the portrait mode, and the display type of the to-be-displayed image is the long vertical image, determining that the screen status of the electronic device matches the display type of the to-be-displayed image, and determining that a screen of the electronic device is a second display area.

In this embodiment of this application, the display area is determined based on the matching result between the screen status of the electronic device and the type of the image, so that the display area can be effectively segmented, and further, display efficiency of the to-be-displayed image can be improved.

To further improve the display efficiency of the to-be-displayed image, in a possible implementation, the method includes:
if the screen status of the electronic device matches the display type of the to-be-displayed image, displaying the to-be-displayed image in the second display area.

To effectively segment the display area, in a possible implementation, the segmenting the first display area to obtain a plurality of sub-display areas includes:
if the screen status of the electronic device is the landscape mode, and the display type of the to-be-displayed image is the long vertical image, obtaining a width of the screen of the electronic device and a width of the to-be-displayed image; and segmenting the first display area to obtain the plurality of sub-display areas based on a ratio of the width of the screen of the electronic device to the width of the to-be-displayed image; or
if the screen status of the electronic device is the portrait mode, and the display type of the to-be-displayed image is the long horizontal image, obtaining a height of the screen of the electronic device and a height of the to-be-displayed image; and segmenting the first display area to obtain the plurality of sub-display areas based on a ratio of the height of the screen of the electronic device to the height of the to-be-displayed image.

To improve the display efficiency of the to-be-displayed image, in a possible implementation, the displaying the plurality of sub-images in the display area includes:
displaying the plurality of sub-images in the plurality of sub-display areas.

To effectively segment the to-be-displayed image, in a possible implementation, the segmenting the to-be-displayed image to obtain a plurality of sub-images includes:
evenly segmenting the to-be-displayed image based on a total quantity of the sub-display areas, to obtain a plurality of sub-images of a same size.

To effectively segment the to-be-displayed image, in a possible implementation, the segmenting the to-be-displayed image to obtain a plurality of sub-images includes:
unevenly segmenting the to-be-displayed image to obtain a plurality of sub-images of different sizes.

In a possible implementation, after the displaying the plurality of sub-images in the display area, the method further includes:
in response to a first operation of a user, performing re-segmentation on the to-be-displayed image, and displaying, in the plurality of sub-display areas, a plurality of sub-images obtained after the re-segmentation. Specifically, the first operation may be scaling the to-be-displayed image.

In this embodiment of this application, the user may dynamically adjust the screen status of the electronic device, so that the to-be-displayed image can be segmented and displayed dynamically, and flexibility of displaying the to-be-displayed image is improved.

In a possible implementation, after the displaying the to-be-displayed image in the second display area, the method further includes:
in response to a second operation of a user, determining that the screen of the electronic device is the first display area, and segmenting the first display area to obtain the plurality of sub-display areas; and specifically, the second operation may be adjusting the screen status of the electronic device, for example, adjusting from the landscape mode of the electronic device to the portrait mode, or adjusting from the portrait mode of the electronic device to the landscape mode; and
segmenting the to-be-displayed image to obtain the plurality of sub-images, and displaying the plurality of sub-images in the plurality of sub-display areas.

In this embodiment of this application, the user may dynamically adjust the screen status of the electronic device, so that the to-be-displayed image can be dynamically segmented and displayed, and further flexibility of displaying the to-be-displayed image is improved.

According to a not-claimed second aspect, an embodiment of this application provides an image display apparatus, applied to an electronic device, and including:
an obtaining module, configured to obtain a to-be-displayed image;
an identification module, configured to identify the to-be-displayed image, and determine a display type of the to-be-displayed image;
a determining module, configured to obtain a screen status of the electronic device, determine whether the screen status of the electronic device matches the display type of the to-be-displayed image, and determine a display area based on a matching result; and
a first display module, configured to: if the screen status of the electronic device does not match the display type of the to-be-displayed image, segment the to-be-displayed image to obtain a plurality of sub-images, and display the plurality of sub-images in the display area.

In a not-claimed possible implementation, the identification module includes:
an obtaining unit, configured to obtain an aspect ratio of the to-be-displayed image;
a comparison unit, configured to compare the aspect ratio of the to-be-displayed image with a preset first threshold and a preset second threshold, where the preset first threshold and the second threshold are determined based on screen resolution of the electronic device; and
an identification unit, configured to: if the aspect ratio of the to-be-displayed image is greater than or equal to the preset first threshold, determine that the display type of the to-be-displayed image is a long vertical image; or if the aspect ratio of the to-be-displayed image is less than or equal to the preset second threshold, determine that the display type of the to-be-displayed image is a long horizontal image.

In a not-claimed possible implementation, the screen status of the electronic device includes a landscape mode and a portrait mode, and the determining module is further configured to: if the screen status of the electronic device is the landscape mode, and the display type of the to-be-displayed image is the long vertical image; or if the screen status of the electronic device is the portrait mode, and the display type of the to-be-displayed image is the long horizontal image, determine that the screen status of the electronic device does not match the display type of the to-be-displayed image, determine that a screen of the electronic device is a first display area, and segment the first display area to obtain a plurality of sub-display areas; or
if the screen status of the electronic device is the landscape mode, and the display type of the to-be-displayed image is the long horizontal image; or if the screen status of the electronic device is the portrait mode, and the display type of the to-be-displayed image is the long vertical image, determine that the screen status of the electronic device matches the display type of the to-be-displayed image, and determine that a screen of the electronic device is a second display area.

In a not-claimed possible implementation, the apparatus further includes:
a second display module, configured to: if the screen status of the electronic device matches the display type of the to-be-displayed image, display the to-be-displayed image in the second display area.

In a not-claimed possible implementation, the determining module is further configured to: if the screen status of the electronic device is the landscape mode, and the display type of the to-be-displayed image is the long vertical image, obtain a width of the screen of the electronic device and a width of the to-be-displayed image; and segment the first display area to obtain the plurality of sub-display areas based on a ratio of the width of the screen of the electronic device to the width of the to-be-displayed image; or
if the screen status of the electronic device is the portrait mode, and the display type of the to-be-displayed image is the long horizontal image, obtain a height of the screen of the electronic device and a height of the to-be-displayed image; and segment the first display area to obtain the plurality of sub-display areas based on a ratio of the height of the screen of the electronic device to the height of the to-be-displayed image.

In a not-claimed possible implementation, the first display module is further configured to display the plurality of sub-images in the plurality of sub-display areas.

In a not-claimed possible implementation, the determining module is further configured to evenly segment the to-be-displayed image based on a total quantity of the sub-display areas, to obtain a plurality of sub-images of a same size.

In a not-claimed possible implementation, the determining module is further configured to unevenly segment the to-be-displayed image to obtain a plurality of sub-images of different sizes.

In a not-claimed possible implementation, the apparatus further includes:
a third display module, configured to: in response to a first operation of a user, perform re-segmentation on the to-be-displayed image, and display, in the plurality of sub-display areas, a plurality of sub-images obtained after the re-segmentation.

In a not-claimed possible implementation, the apparatus further includes:
a fourth display module, configured to: in response to a second operation of a user, determine that the screen of the electronic device is the first display area, and segment the first display area to obtain the plurality of sub-display areas; and segment the to-be-displayed image to obtain the plurality of sub-images, and display the plurality of sub-images in the plurality of sub-display areas.

According to a third aspect of the invention, the invention provides an electronic device, including:
a memory, configured to store computer program code, the computer program code includes instructions, and when the electronic device reads the instructions from the memory, the electronic device is enabled to perform the following steps:
obtaining a to-be-displayed image;
identifying the to-be-displayed image, and determining a display type of the to-be-displayed image;
obtaining a screen status of the electronic device, and determining whether the screen status of the electronic device matches the display type of the to-be-displayed image;
determining a display area based on a matching result; and
if the screen status of the electronic device does not match the display type of the to-be-displayed image, segmenting the to-be-displayed image to obtain a plurality of sub-images, and displaying the plurality of sub-images in the display area.

In a possible not-claimed implementation, when the instructions are executed by the electronic device, the electronic device is enabled to perform the step of identifying the to-be-displayed image, and determining a display type of the to-be-displayed image, and the step includes:
obtaining an aspect ratio of the to-be-displayed image;
comparing the aspect ratio of the to-be-displayed image with a preset first threshold and a preset second threshold, where the preset first threshold and the second threshold are determined based on screen resolution of the electronic device; and
if the aspect ratio of the to-be-displayed image is greater than or equal to the preset first threshold, determining that the display type of the to-be-displayed image is a long vertical image; or
if the aspect ratio of the to-be-displayed image is less than or equal to the preset second threshold, determining that the display type of the to-be-displayed image is a long horizontal image.

In a possible not-claimed implementation, the screen status of the electronic device includes a landscape mode and a portrait mode; and when the instructions are executed by the electronic device, the electronic device is enabled to perform the step of determining a display area based on a matching result, and the step includes:
if the screen status of the electronic device is the landscape mode, and the display type of the to-be-displayed image is the long vertical image; or if the screen status of the electronic device is the portrait mode, and the display type of the to-be-displayed image is the long horizontal image, determining that the screen status of the electronic device does not match the display type of the to-be-displayed image, determining that a screen of the electronic device is a first display area, and segmenting the first display area to obtain a plurality of sub-display areas; or
if the screen status of the electronic device is the landscape mode, and the display type of the to-be-displayed image is the long horizontal image; or if the screen status of the electronic device is the portrait mode, and the display type of the to-be-displayed image is the long vertical image, determining that the screen status of the electronic device matches the display type of the to-be-displayed image, and determining that a screen of the electronic device is a second display area.

In a possible not-claimed implementation, when the instructions are executed by the electronic device, the electronic device is enabled to further perform the following step:
if the screen status of the electronic device matches the display type of the to-be-displayed image, displaying the to-be-displayed image in the second display area.

In a possible not-claimed implementation, when the instructions are executed by the electronic device, the electronic device is enabled to perform the step of segmenting the first display area to obtain a plurality of sub-display areas, and the step includes:
if the screen status of the electronic device is the landscape mode, and the display type of the to-be-displayed image is the long vertical image, obtaining a width of the screen of the electronic device and a width of the to-be-displayed image; and segmenting the first display area to obtain the plurality of sub-display areas based on a ratio of the width of the screen of the electronic device to the width of the to-be-displayed image; or
if the screen status of the electronic device is the portrait mode, and the display type of the to-be-displayed image is the long horizontal image, obtaining a height of the screen of the electronic device and a height of the to-be-displayed image; and segmenting the first display area to obtain the plurality of sub-display areas based on a ratio of the height of the screen of the electronic device to the height of the to-be-displayed image.

In a possible not-claimed implementation, when the instructions are executed by the electronic device, the electronic device is enabled to perform the step of displaying the plurality of sub-images in the display area, and the step includes:
displaying the plurality of sub-images in the plurality of sub-display areas.

In a possible not-claimed implementation, when the instructions are executed by the electronic device, the electronic device is enabled to perform the step of segmenting the to-be-displayed image to obtain the plurality of sub-images, and the step includes:
evenly segmenting the to-be-displayed image based on a total quantity of the sub-display areas, to obtain a plurality of sub-images of a same size.

In a possible not-claimed implementation, when the instructions are executed by the electronic device, the electronic device is enabled to perform the step of segmenting the to-be-displayed image to obtain the plurality of sub-images, and the step includes:
unevenly segmenting the to-be-displayed image to obtain a plurality of sub-images of different sizes.

In a possible not-claimed implementation, when the instructions are executed by the electronic device, the electronic device is enabled to further perform the following step after performing the step of displaying the plurality of sub-images in the display area:
in response to a first operation of a user, performing re-segmentation on the to-be-displayed image, and displaying, in the plurality of sub-display areas, a plurality of sub-images obtained after the re-segmentation.

In a possible not-claimed implementation, when the instructions are executed by the electronic device, the electronic device is enabled to further perform the following step after performing the step of displaying the to-be-displayed image in the second display area:
in response to a second operation of a user, determining that the screen of the electronic device is the first display area, and segmenting the first display area to obtain the plurality of sub-display areas; and
segmenting the to-be-displayed image to obtain the plurality of sub-images, and displaying the plurality of sub-images in the plurality of sub-display areas.

According to a fourth aspect of the invention, the invention provides a computer-readable storage medium. The computer-readable storage medium stores a computer program. When the computer program runs on a computer, the computer is enabled to perform the method according to the first aspect.

According to a fifth aspect of the invention, the invention provides a computer program. When the computer program is executed by a computer, the computer program is configured to perform the method according to the first aspect.

In a possible not-claimed design, all or some of the programs in the fifth aspect may be stored in a storage medium encapsulated with a processor, or some or all of the programs may be stored in a memory not encapsulated with a processor.

### BRIEF DESCRIPTION OF DRAWINGS

FIG. 1 is a schematic flowchart of an embodiment of an image display method according to this application;
FIG. 2 is a schematic diagram of display effects of a landscape screen and a long vertical image according to an embodiment of this application;
FIG. 3 is a schematic diagram of display effects of a portrait screen and a long horizontal image according to an embodiment of this application;
FIG. 4 is a schematic diagram of segmentation of a display area of a landscape screen according to an embodiment of this application;
FIG. 5 is a schematic diagram of segmentation of a display area of a portrait screen according to an embodiment of this application;
FIG. 6 is a schematic diagram of an embodiment of image segmentation of a long vertical image according to this application;
FIG. 7 is a schematic diagram of image segmentation of a long horizontal image according to an embodiment of this application;
FIG. 8 is a schematic diagram of a display effect of an embodiment of user operation display according to this application;
FIG. 9 is a schematic diagram of a display effect of another embodiment of user operation display according to this application;
FIG. 10 is a schematic flowchart of another embodiment of an image display method according to this application;
FIG. 11 is a schematic diagram of another embodiment of image segmentation of a long vertical image according to this application;
FIG. 12 is a schematic diagram of a display effect of still another embodiment of user operation display according to this application;
FIG. 13 to FIG. 15 are schematic diagrams of display effects of yet another embodiment of user operation display according to this application;
FIG. 16 is a schematic diagram of a structure of an image display apparatus according to an embodiment of this application; and
FIG. 17 is a schematic diagram of a structure of an electronic device according to an embodiment of this application.

### DESCRIPTION OF EMBODIMENTS

The following describes the technical solutions in embodiments of this application with reference to the accompanying drawings in embodiments of this application. In description in embodiments of this application, "/" means "or" unless otherwise specified. For example, A/B may represent A or B. In this specification, "and/or" is merely an association relationship for describing associated objects and represents that three relationships may exist. For example, A and/or B may represent the following three cases: Only A exists, both A and B exist, and only B exists.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In the description in embodiments of this application, unless otherwise specified, "a plurality of" means two or more than two.

Currently, when a picture is displayed in an electronic device, a display area of the picture is usually obtained based on parameters such as a zoom ratio of the picture and a display location of the picture. Then bitmap information is obtained through regional decoding and the like, and finally an image is rendered and displayed on the display area.

However, when a vertical long strip picture is displayed by an electronic device that is in a landscape mode, because a ratio of a height to a width of the long strip picture is large, the display area of the image occupies only a small part of the entire picture, and a user needs to continuously slide the picture to browse the entire picture. This brings poor user experience.

Based on the foregoing problem, embodiments of this application provide an image display method, applied to an electronic device. The electronic device may be an electronic device with an image display function. A specific form of the electronic device is not specially limited in embodiments of this application.

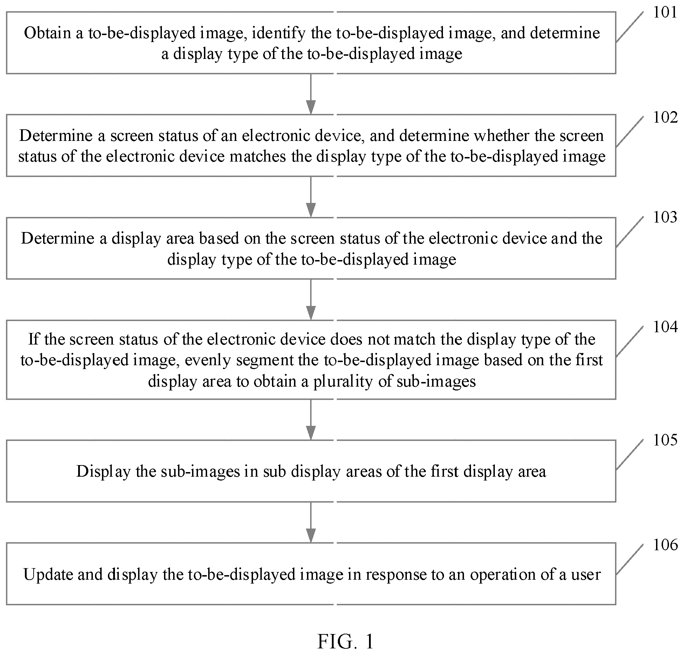

The following describes the image display method provided in embodiments of this application with reference to FIG. 1 to FIG. 15.

FIG. 1 is a schematic flowchart of an embodiment of an image display method according to this application. The method includes the following steps.

Step 101: Obtain a to-be-displayed image, identify the to-be-displayed image, and determine a display type of the to-be-displayed image.

Specifically, the to-be-displayed image may be an image selected by a user in an album of the electronic device, or the to-be-displayed image may be an image selected by a user in a web page when the user browses the web page on the electronic device. A source of the to-be-displayed image is not specially limited in this application. The display type may be a long vertical image or a long horizontal image.

Next, a first threshold I₁ of a preset aspect ratio is obtained. During specific implementation, the first threshold I₁ of the preset aspect ratio is determined based on resolution of the electronic device. For example, if the screen resolution of the electronic device is 3840*2160, the first threshold I₁ of the aspect ratio may be set to any value in 3<=I₁<=5. It may be understood that I₁ may be any value within the foregoing value range. The foregoing screen resolution and values of I₁ are merely examples for description, and constitute no limitation on this embodiment of this application. In some embodiments, the foregoing screen resolution and I₁ may alternatively be other values.

Then, an aspect ratio of the to-be-displayed image is calculated, and the aspect ratio of the to-be-displayed image is compared with the first threshold I₁ of the preset aspect ratio. If the aspect ratio of the to-be-displayed image is greater than or equal to the first threshold I₁ of the preset aspect ratio, it is determined that the to-be-displayed image is the long vertical image.

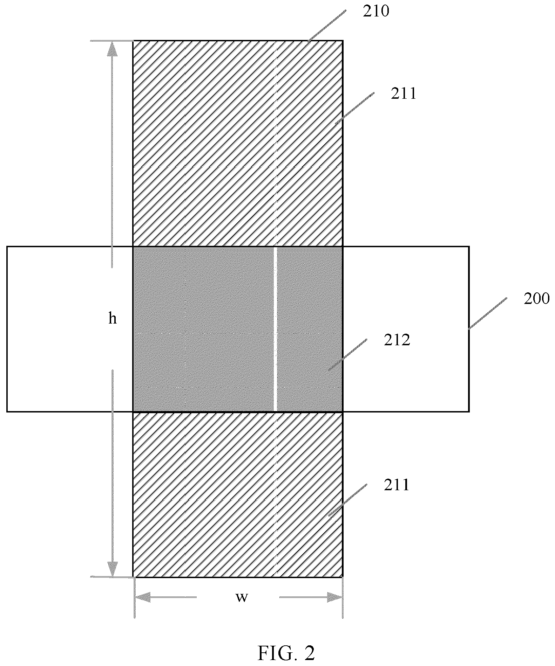

Description is provided with reference to FIG. 2. As shown in FIG. 2, a display of an electronic device displays an interface 200. A to-be-displayed image 210 includes a visible area 211 (for example, a pure gray area) and invisible areas 212 (for example, slash areas). The visible area 211 is visible in the interface 200, and the invisible areas 212 are invisible in the interface 200. A height of the to-be-displayed image 210 is h and a width of the to-be-displayed image 210 is w. If h/w >= I₁, the to-be-displayed image 210 is the long vertical image.

A second threshold I₂ of a preset aspect ratio is further obtained. During specific implementation, the second threshold I₂ of the preset aspect ratio is determined based on resolution of the electronic device. For example, if the screen resolution of the electronic device is 3840*2160, the second threshold I₂ of the aspect ratio may be set to any value in 0.2<=I₂<=0.3. It may be understood that I₂ may be any value within the foregoing value range. The foregoing screen resolution and values of I₂ are merely examples for description, and constitute no limitation on this embodiment of this application. In some embodiments, the foregoing screen resolution and I₂ may alternatively be other values. Similarly, the aspect ratio of the to-be-displayed image is compared with the second threshold I₂ of the preset aspect ratio. If the aspect ratio of the to-be-displayed image is less than or equal to the second threshold I₂ of the preset aspect ratio, it is determined that the to-be-displayed image is the long horizontal image.

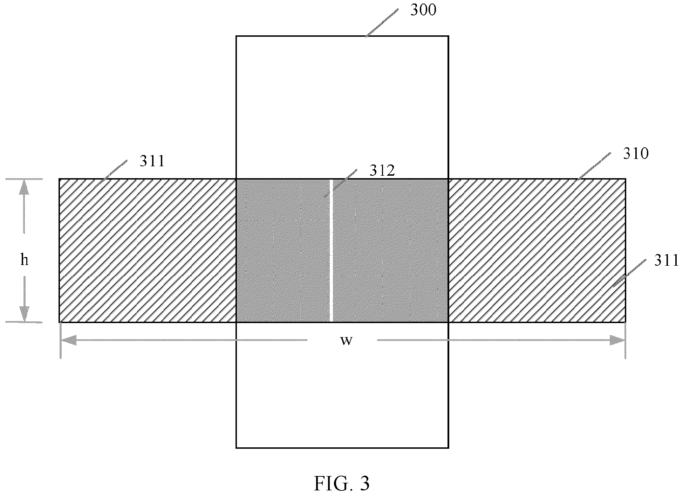

Description is provided with reference to FIG. 3. As shown in FIG. 3, a display of an electronic device displays an interface 300. A to-be-displayed image 310 includes a visible area 311 and invisible areas 312. A height of the to-be-displayed image 310 is h and a width of the to-be-displayed image 310 is w. If h/w <= I₂, the to-be-displayed image 200 is the long horizontal image.

Step 102: Determine a screen status of the electronic device, and determine whether the screen status of the electronic device matches the display type of the to-be-displayed image.

Specifically, the screen status of the electronic device includes a landscape mode or a portrait mode. During specific implementation, the screen status of the electronic device may be determined through an included angle between a direction of the screen and a gravity direction. For example, the electronic device (for example, a mobile phone) may be initially set in the portrait mode. In other words, according to a common use habit of the user and a size of the mobile phone, the mobile phone is usually represented in the portrait mode. In this case, the included angle between the direction of the screen and the gravity direction is 0 degrees. When the user uses some applications (for example, watching a video), for convenience of watching, the user may usually place the mobile phone horizontally. In this case, the mobile phone is in the landscape mode, and the included angle between the direction of the screen and the gravity direction is 90 degrees (for example, the mobile phone is placed horizontally rightward) or -90 degrees (for example, the mobile phone is placed horizontally leftward). Therefore, the screen status of the electronic device may be determined based on the included angle between the screen direction and the gravity direction. It may be understood that the screen status of the electronic device may alternatively be determined in another manner. The foregoing manner for determining the screen status of the electronic device does not constitute a limitation on this embodiment of this application.

In this case, whether the screen status of the electronic device matches the display type of the to-be-displayed image may be determined based on the screen status of the electronic device.

If the screen status of the electronic device is the landscape mode, and the to-be-displayed image is the long vertical image, it is determined that the screen status of the electronic device does not match the display type of the to-be-displayed image.

If the screen status of the electronic device is the portrait mode, and the to-be-displayed image is the long horizontal image, it is determined that the screen status of the electronic device does not match the display type of the to-be-displayed image.

If the screen status of the electronic device is the landscape mode, and the to-be-displayed image is the long horizontal image, it is determined that the screen status of the electronic device matches the display type of the to-be-displayed image.

If the screen status of the electronic device is the portrait mode, and the to-be-displayed image is the long vertical image, it is determined that the screen status of the electronic device matches the display type of the to-be-displayed image.

Step 103: Determine a display area based on the screen status of the electronic device and the display type of the to-be-displayed image.

Specifically, if the screen status of the electronic device does not match the display type of the to-be-displayed image, a first display area is determined based on the height or the width of the to-be-displayed image and a height or a width of the screen of the electronic device.

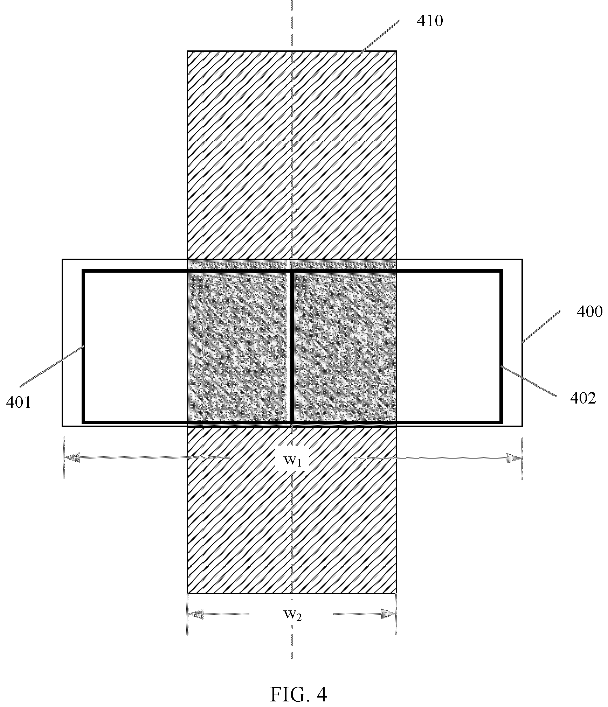

An example in which the electronic device is in the landscape mode and the to-be-displayed image is the long vertical image is used for description. As shown in FIG. 4, the electronic device is in the landscape mode, the display of the electronic device displays an interface 400, and a width of the interface 400 is w₁. A to-be-displayed image 410 is the long vertical image, and a width of the to-be-displayed image 410 is w₂. In this case, a numeric value of w₁/w₂ may be calculated, and the first display area may be determined based on the numeric value of w₁/w₂. For example,
if w₁/w₂ >= 2, the interface 400 may be evenly segmented into two sub-display areas, for example, a first sub-display area 401 (for example, a left bold box) and a second sub-display area 402 (for example, a right bold box). A width of the first sub-display area 401 is equal to a width of the second sub-display area 402. It may be understood that the interface 400 may alternatively be segmented into three or more sub-display areas. For example, if w₁/w₂ >= 3, the interface 400 may be evenly segmented into three sub-display areas. The division of the interface 400 and a quantity of the sub-display areas are merely examples for description, and constitute no limitation on this embodiment of this application.

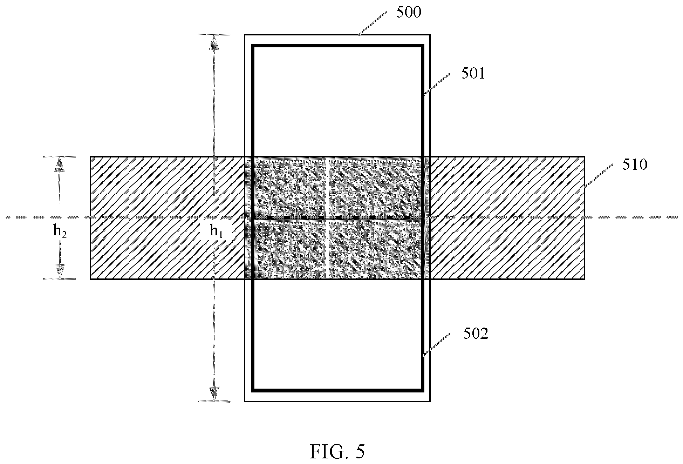

Then, an example in which the electronic device is in the portrait mode and the to-be-displayed image is the long horizontal image is used for description. As shown in FIG. 5, the electronic device is in the portrait mode, the display of the electronic device displays an interface 500, and a height of the interface 500 is h₁. A to-be-displayed image 510 is the long horizontal image, and a height of the to-be-displayed image 510 is h₂. In this case, a numeric value of h₁/h₂ may be calculated, and the first display area may be determined based on the numeric value of h₁/ h₂. For example,
if h₁/h₂ >= 2, the interface 500 may be evenly segmented into two sub-display areas, for example, a first sub-display area 501 (for example, an upper bold box) and a second sub-display area 502 (for example, a lower bold box). A height of the first sub-display area 501 is equal to a height of the second sub-display area 402. It may be understood that the interface 500 may alternatively be segmented into three or more sub-display areas. For example, if h₁/h₂ >= 3, the interface 500 may be evenly segmented into three sub-display areas. The division of the interface 500 and a quantity of the sub-display areas are merely examples for description, and constitute no limitation on this embodiment of this application.

If the screen status of the electronic device matches the display type of the to-be-displayed image, it is determined that the entire screen of the electronic device is a second display area, and the to-be-displayed image is directly displayed in the second display area.

Step 104: If the screen status of the electronic device does not match the display type of the to-be-displayed image, evenly segment the to-be-displayed image based on the first display area to obtain a plurality of sub-images.

Specifically, after the first display area is determined, the to-be-displayed image is segmented based on a total quantity of sub-display areas in the first display area, so that the plurality of sub-images may be obtained. During specific implementation, the to-be-displayed image may be evenly segmented based on the total quantity of sub-display areas. For example, the to-be-displayed image may be evenly segmented into n blocks, and each block may be each corresponding sub-image, where n is the total quantity of sub-display areas.

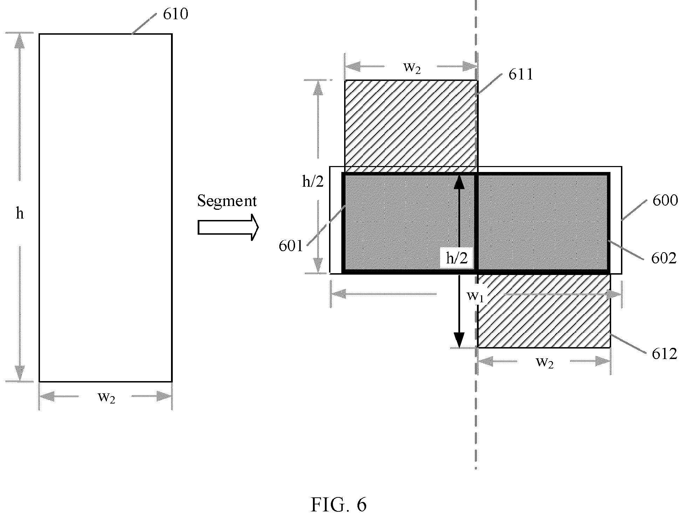

Sub-display areas in the left and right shown in FIG. 4 are used as an example for description. As shown in FIG. 6, the electronic device displays an interface 600. A width of the interface 600 is w₁, and the interface 600 is evenly segmented into two sub-display areas from left to right. The two sub-display areas are a first sub-display area 601 and a second sub-display area 602. A width of the to-be-displayed image 610 is w₂, a height of the to-be-displayed image 610 is h, and w₁/w₂ >= 2. In this case, the to-be-displayed image 610 may be longitudinally and evenly segmented into two blocks (for example, a first sub-image 611 and a second sub-image 612). A width of the first sub-image 611 is w₂ and a height thereof is h/2, and a width of the second sub-image 612 is w₂ and a height thereof is h/2. Then, the first sub-image 611 may be displayed in the first sub-display area 601, and the second sub-image 612 may be displayed in the second sub-display area 602.

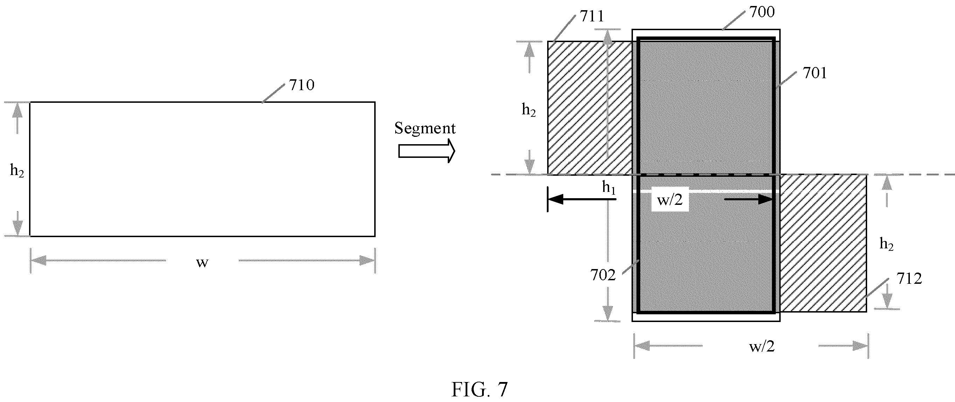

Then, sub-display areas in the upper and lower shown in FIG. 5 are used as an example for description. As shown in FIG. 7, the electronic device displays an interface 700. A height of the interface 700 is h1, and the interface 700 is evenly segmented into two sub-display areas from top to bottom. The two sub-display areas are a first sub-display area 701 and a second sub-display area 702. A width of a to-be-displayed image 710 is w, a height of the to-be-displayed image 710 is h₂, and h₁/h₂ >= 2. In this case, the to-be-displayed image 710 may be horizontally and evenly segmented into two blocks (for example, a first sub-image 711 and a second sub-image 712). A height of the first sub-image 711 is h₂ and a width thereof is w/2, and a height of the second sub-image 712 is h₂ and a width thereof is w/2. Then, the first sub-image 711 may be displayed in the first sub-display area 701, and the second sub-image 712 may be displayed in the second sub-display area 702.

Optionally, in some scenarios, a width or a height of the to-be-displayed image is insufficient to segment the display area of the interface displayed on the electronic device. For example, if w₁/w₂ < 2, because the interface displayed on the electronic device cannot simultaneously display two images that have a same width as the to-be-displayed image left and right, there is no need to segment the display area of the interface displayed on the electronic device, where w₁ is a width of the interface displayed on the electronic device, w₂ is the width of the to-be-displayed image. Therefore, in some embodiments, the user may also zoom in or out a size of the to-be-displayed image. For example, the user may zoom in or out the to-be-displayed image by using a multi-finger gesture operation. In response to a zooming operation (for example, zooming out) of the user, the width of the interface displayed on the electronic device is reduced. When the width of the interface displayed on the electronic device is reduced to a specific value, for example, if w₁/w₂ >= 2, the interface displayed on the electronic device may be segmented into display areas. In addition, image segmentation may be performed on the to-be-displayed image, so that the to-be-displayed image can be displayed in parallel in the foregoing display area, to improve image display efficiency.

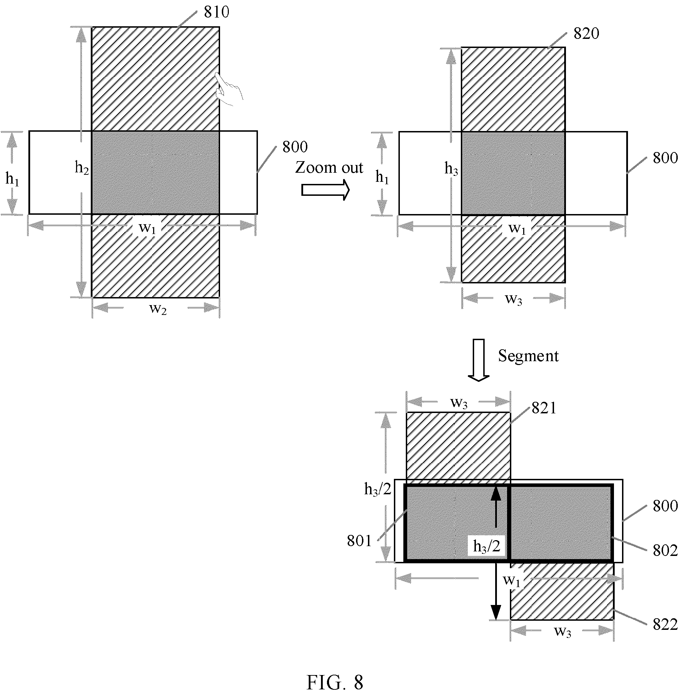

Description is provided with reference to FIG. 8. As shown in FIG. 8, the electronic device displays an interface 800, and a width of the interface 800 is w₁ and a height of the interface 800 is h₁. A width of a to-be-displayed image 810 is w₂, and a height of the to-be-displayed image 810 is h₂, and w₁/w₂ < 2. In this case, the user may zoom out the to-be-displayed image 810 to obtain a to-be-displayed image 820. A width of the to-be-displayed image 820 is w₃ and a height of the to-be-displayed image 820 is h₃, and w₃ < w₂. If w₁/w₃ >= 2, the interface 800 may be segmented, so that a first sub-display area 801 and a second sub-display area 802 may be obtained, where a width of the first sub-display area 801 is equal to a width of the second sub-display area 802. Then, image segmentation may be performed on the to-be-displayed image 820, so that a first sub-image 821 and a second sub-image 822 may be obtained, where heights and widths of the first sub-image 821 and the second sub-image 822 are equal. For example, a height of the first sub-image 821 is h₃/2 and a width of the first sub-image 821 is w₃. A height of the second sub-image 822 is h₃/2 and a width of the second sub-image 822 is w₃.

Step 105: Display the sub-images in sub-display areas of the first display area.

Specifically, when the sub-display areas of the first display area (for example, the first sub-display area and the second sub-display area) and segmented to-be-displayed images (for example, the first sub-image and the second sub-image) are obtained, the first sub-image and the second sub-image may be displayed in the first sub-display area and the second sub-display area. For example, the first sub-image may be displayed in the first sub-display area, and the second sub-image may be displayed in the second sub-display area. During specific implementation, after the first sub-image and the second sub-image are obtained, the first sub-image and the second sub-image may be decoded by using an area decoder, so that bitmap data corresponding to each sub-image may be obtained. Each piece of bitmap data may be rendered and displayed in a corresponding sub-display area.

Optionally, after the sub-display areas are obtained, overall decoding may also be performed on the to-be-displayed image before segmentation, to obtain the bitmap data. Then, the bitmap data may be segmented based on the total quantity of the sub-display areas, so that a first sub-bitmap and a second sub-bitmap may be obtained, where the first sub-bitmap may be bitmap data of the first sub-image, and the second sub-bitmap may be bitmap data of the second sub-image. Then, the first sub-bitmap may be rendered and displayed in the first sub-display area, and the second sub-bitmap may be rendered and displayed in the second sub-display area.

It should be noted that the first sub-display area, the second sub-display area, the first sub-image, and the second sub-image are merely examples for description, and constitute no limitation on this embodiment of this application. In some embodiments, the interface displayed on the electronic device may be segmented into three or more sub-display areas, or the to-be-displayed image may be segmented into three or more sub-images.

Step 106: Update and display the to-be-displayed image in response to the operation of the user.

Specifically, after the to-be-displayed image is displayed in the first display area or the second display area, the user may further perform operations on the electronic device, so that the to-be-displayed image is updated and displayed. The foregoing operations may include performing gesture sliding on the screen of the electronic device, performing transposition on the screen of the electronic device, and the like.

If the electronic device determines that the to-be-displayed image is displayed in the first display area, the user may further perform a sliding operation on the to-be-displayed image, to slide and browse on the to-be-displayed image. For example, the user may browse the to-be-displayed image by using a sliding gesture. In response to a sliding operation of the user, the electronic device may obtain a display location of a sub-image, and may re-segment the to-be-displayed image based on the display location of the sub-image, perform operations such as decoding and rendering on the sub-images obtained after re-segmentation, and display the sub-images after rendering.

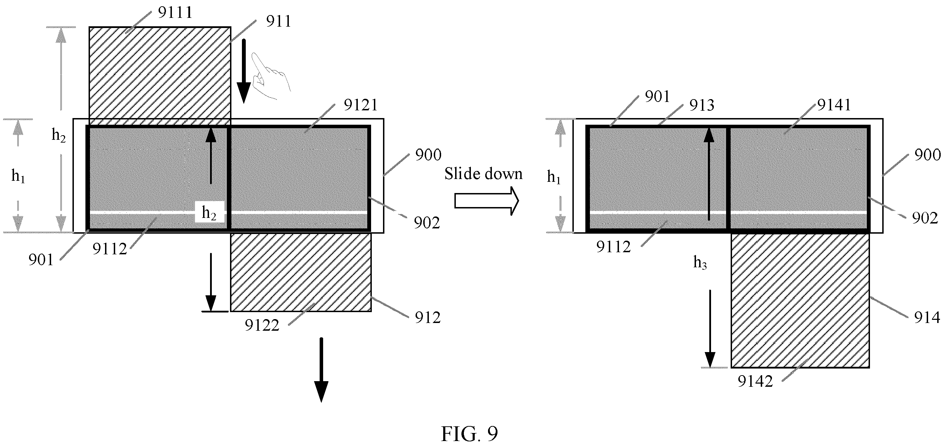

Description is provided with reference to FIG. 9. As shown in FIG. 9, the electronic device displays an interface 900. A height of the interface 900 is h₁, and the interface 900 includes a first sub-display area 901 and a second sub-display area 902. The to-be-displayed image includes a first sub-image 911 and a second sub-image 912. The first sub-display area 901 displays the first sub-image 911, and the second sub-display area 902 displays the first sub-image 912. The first sub-image 911 includes an invisible area 9111 and a visible area 9112, and the second sub-image 912 includes a visible area 9121 and an invisible area 9122. In this case, the user may slide (for example, slide down) on the first sub-image 911, to browse the to-be-displayed image. As the user continuously slides down the first sub-image 911, a height of the invisible area 9111 is continuously reduced, and a height of the visible area 9112 remains unchanged. The electronic device may re-segment the to-be-displayed image along with the sliding of the sub-image. For example, when browsing to the top of the to-be-displayed image, the user may perform re-segmentation on the to-be-displayed image, so that a first sub-image 913 and a second sub-image 914 may be obtained. The first sub-image 913 no longer includes the invisible area 9111. In other words, a height of the first sub-image 913 is equal to a height of the first display area 901, for example, the height of the first sub-image 913 is h₁. The second sub-image 914 includes a visible area 9141 and an invisible area 9142. A height of the visible area 9141 is the same as that of the visible area 9121. A height of the invisible area 9142 is greater than a height of the invisible area 9122. The height of the second sub-image 914 is h₃, h₃>h₁, and h₃+h₁ = 2*h₂.

If the electronic device determines that the second display area displays the to-be-displayed image, the user may transpose the electronic device. For example, the user may vertically set the electronic device in the landscape mode to the portrait mode, or the user may horizontally set the electronic device in the portrait mode to the landscape mode. An example in which the electronic device is in the landscape mode is used for description. If the to-be-displayed image is a long horizontal image, the electronic device may determine to display the to-be-displayed image in the second display area. In this case, the user may vertically set the electronic device to the portrait mode. Because the portrait mode does not match the long horizontal image, the long horizontal image may be segmented and displayed. For a specific process of segmenting and displaying, reference may be made to step 103 to step 105. Details are not described herein again.

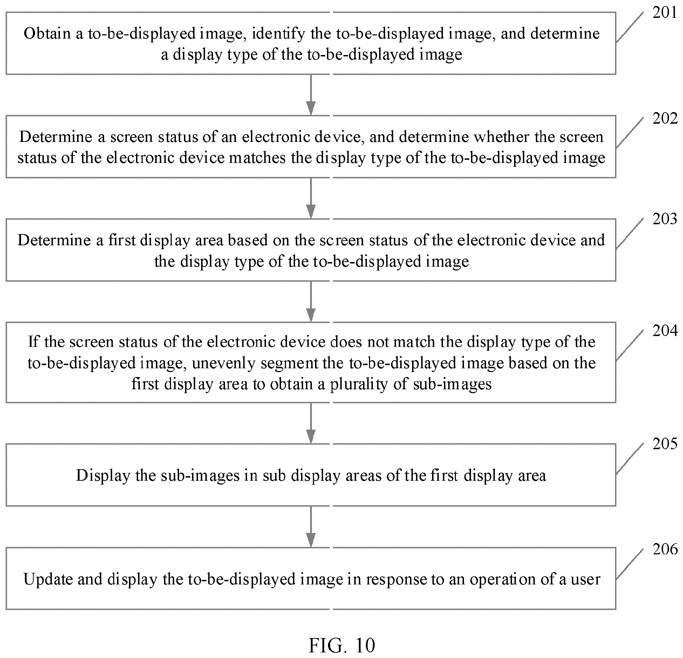

The foregoing uses FIG. 1 to FIG. 9 as an example to describe evenly segmenting the to-be-displayed image, and the following uses FIG. 10 to FIG. 15 as an example to describe unevenly segmenting the to-be-displayed image.

FIG. 10 is a schematic flowchart of another embodiment of an image display method according to this application. The method includes the following steps.

Step 201: Obtain a to-be-displayed image, identify the to-be-displayed image, and determine a display type of the to-be-displayed image.

Specifically, the display type is a long vertical image or a long horizontal image.

Then, a first threshold I₁ of a preset aspect ratio is obtained. During specific implementation, the first threshold I₁ of the preset aspect ratio is determined based on resolution of an electronic device. For example, if the screen resolution of the electronic device is 3840*2160, the first threshold I₁ of the aspect ratio may be set to any value in 3<=I₁<=5. It may be understood that I₁ may be any value within the foregoing value range. The foregoing screen resolution and values of I₁ are merely examples for description, and constitute no limitation on this embodiment of this application. In some embodiments, the foregoing screen resolution and I₁ may alternatively be other values.

Then, an aspect ratio of the to-be-displayed image is calculated, and the aspect ratio of the to-be-displayed image may be compared with the first threshold I₁ of the preset aspect ratio. If the aspect ratio of the to-be-displayed image is greater than or equal to the first threshold I₁ of the preset aspect ratio, it is determined that the to-be-displayed image is the long vertical image.

A second threshold I₂ of a preset aspect ratio is further obtained. During specific implementation, the second threshold I₂ of the preset aspect ratio is determined based on resolution of an electronic device. For example, if the screen resolution of the electronic device is 3840*2160, the second threshold I₂ of the aspect ratio may be set to any value in 0.2<=I₂<=0.3. It may be understood that I₂ may be any value within the foregoing value range. The foregoing screen resolution and values of I₂ are merely examples for description, and constitute no limitation on this embodiment of this application. In some embodiments, the foregoing screen resolution and I₂ may alternatively be other values. Similarly, the aspect ratio of the to-be-displayed image may alternatively be compared with the second threshold I₂ of the preset aspect ratio. If the aspect ratio of the to-be-displayed image is less than or equal to the second threshold I₂ of the preset aspect ratio, it is determined that the to-be-displayed image is the long horizontal image.

Step 202: Determine a screen status of the electronic device, and determine whether the screen status of the electronic device matches the display type of the to-be-displayed image.

Specifically, the screen status of the electronic device includes a landscape mode or a portrait mode. During specific implementation, the screen status of the electronic device may be determined through an included angle between a direction of the screen and a gravity direction. For example, the electronic device (for example, a mobile phone) may be initially set in a portrait mode. In other words, according to a common use habit of the user and a size of the mobile phone, the mobile phone is usually represented in the portrait mode. In this case, the included angle between the direction of the screen and the gravity direction is 0 degrees. When the user uses some applications (for example, watching a video), for convenience of watching, the user may usually place the mobile phone horizontally. In this case, the mobile phone is in the landscape mode, and the included angle between the direction of the screen and the gravity direction is 90 degrees (for example, the mobile phone is placed horizontally rightward) or -90 degrees (for example, the mobile phone is placed horizontally leftward). Therefore, the screen status of the electronic device may be determined based on the included angle between the screen direction and the gravity direction. It may be understood that the screen status of the electronic device may alternatively be determined in another manner. The foregoing manner of determining the screen status of the electronic device does not constitute a limitation on this embodiment of this application.

In this case, whether the screen status of the electronic device matches the display type of the to-be-displayed image may be determined based on the screen status of the electronic device.

If the screen status of the electronic device is the landscape mode, and the to-be-displayed image is the long vertical image, it is determined that the screen status of the electronic device does not match the display type of the to-be-displayed image.

If the screen status of the electronic device is the portrait mode, and the to-be-displayed image is the long horizontal image, it is determined that the screen status of the electronic device does not match the display type of the to-be-displayed image.

If the screen status of the electronic device is the landscape mode, and the to-be-displayed image is the long horizontal image, it is determined that the screen status of the electronic device matches the display type of the to-be-displayed image.

If the screen status of the electronic device is the portrait mode, and the to-be-displayed image is the long vertical image, it is determined that the screen status of the electronic device matches the display type of the to-be-displayed image.

Step 203: Determine a first display area based on the screen status of the electronic device and the display type of the to-be-displayed image.

Specifically, if the screen status of the electronic device does not match the display type of the to-be-displayed image, the first display area is determined based on a height or a width of the to-be-displayed image and a height or a width of a screen of the electronic device.

If the screen status of the electronic device matches the display type of the to-be-displayed image, it is determined that the entire screen of the electronic device is a second display area, and the to-be-displayed image is directly displayed in the second display area.

Step 204: If the screen status of the electronic device does not match the display type of the to-be-displayed image, unevenly segment the to-be-displayed image based on the first display area to obtain a plurality of sub-images.

Specifically, after the first display area is segmented on the interface of the electronic device, uneven segmentation may be performed on the to-be-displayed image. In an actual application, a to-be-displayed image is usually formed by stitching a plurality of images, and when the plurality of images are stitched, an obvious stitching trace exists at an edge of the stitching. Therefore, during specific implementation, the to-be-displayed image may be scanned row by row from top to bottom, and edge detection is performed on the to-be-displayed image by using an edge detection algorithm. In this way, stitching points between stitched images may be obtained. Segmentation is performed based on the stitching points, and a plurality of stitched images can be obtained. Then, the plurality of stitched images obtained through segmentation by using the edge detection algorithm may be used as sub-images.

Step 205: Display the sub-images in sub-display areas of the first display area.

Specifically, after the foregoing sub-images are obtained, each sub-image may be displayed in a corresponding sub-display area. During specific implementation, the to-be-displayed image may be displayed in the sub-display area according to a sequence of segmentation.

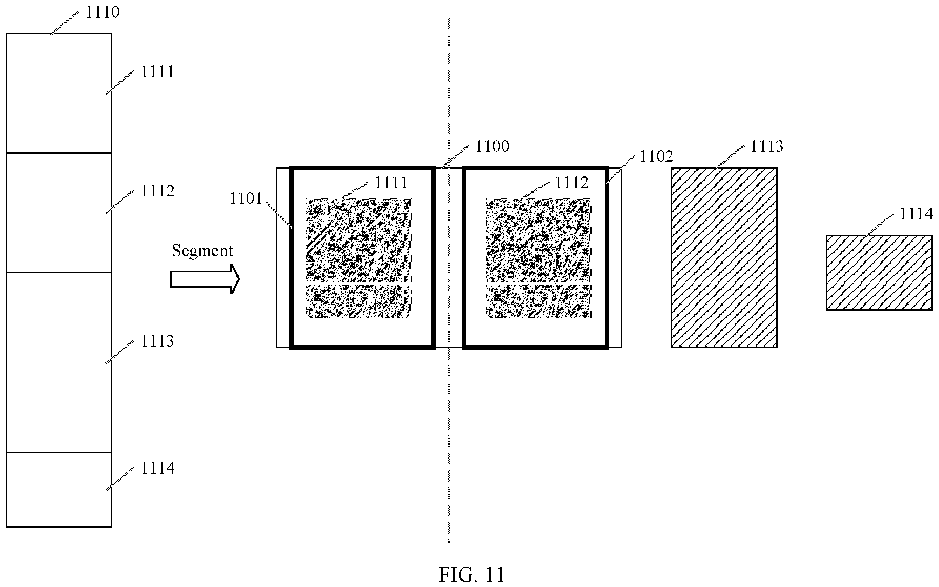

Description is provided with reference to FIG. 11. As shown in FIG. 11, a to-be-displayed image 1110 is obtained by stitching a first sub-image 1111, a second sub-image 1112, a third sub-image 1113, and a fourth sub-image 1114. After the to-be-displayed image 1110 is segmented by using the edge detection algorithm, the first sub-image 1111, the second sub-image 1112, the third sub-image 1113, and the fourth sub-image 1114 may be obtained. The electronic device displays an interface 1100, and the interface 1100 includes a first sub-display area 1101 and a second sub-display area 1102. In this case, the first sub-image 1111 may be displayed in the first sub-display area 1101, the second sub-image 1112 may be displayed in the second sub-display area 1102, and the third sub-image 1113 and the fourth sub-image 1114 are respectively arranged after the second sub-image 1112 and wait to be displayed.

It may be understood that FIG. 11 shows an example of a scenario in which the electronic device is in the landscape mode and the to-be-displayed image is a long vertical image. The foregoing manners of performing uneven segmentation and displaying on the to-be-displayed image are also applicable to a scenario in which the electronic device is in the portrait mode and the to-be-displayed image is a long horizontal image.

Step 206: Update and display the to-be-displayed image in response to the operation of the user.

Specifically, after the to-be-displayed image is displayed in the first display area or the second display area, the user may further perform operations on the electronic device, so that the to-be-displayed image is updated and displayed. The foregoing operations may include performing tapping and sliding on the screen of the electronic device, performing transposition on the screen of the electronic device, and the like.

If the electronic device determines that the to-be-displayed image is displayed in the first display area, the user may perform a sliding operation on the interface of the electronic device, to browse sub-images that are not displayed in the display areas. For example, the user may slide on the interface of the electronic device (for example, slide left, slide right, slide up, or slide down). The interface of the electronic device displays a new image in response to the sliding operation of the user.

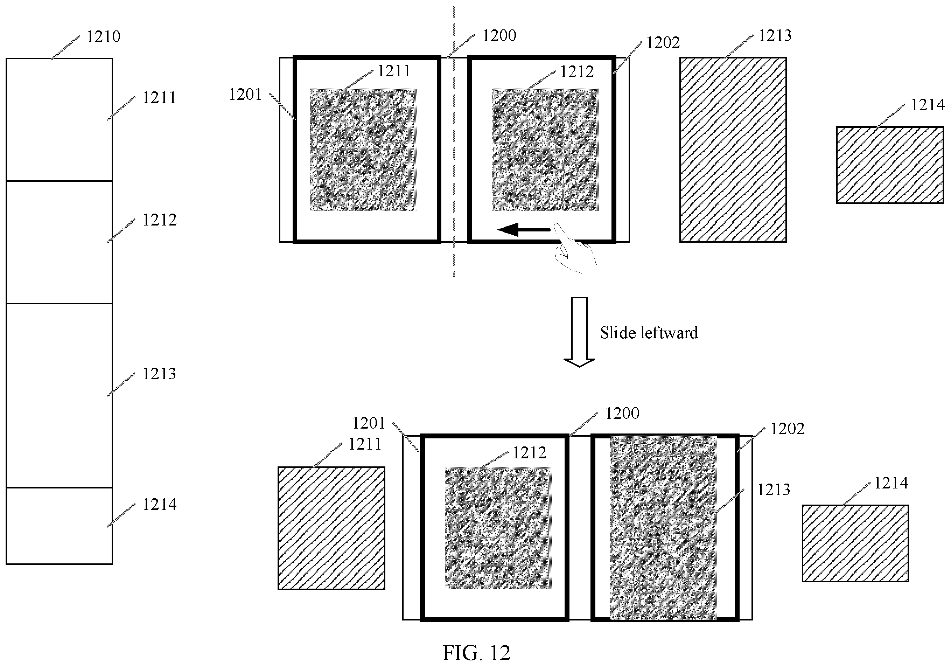

Description is provided with reference to FIG. 12. As shown in FIG. 12, a to-be-displayed image 1210 includes a first sub-image 1211, a second sub-image 1212, a third sub-image 1213, and a fourth sub-image 1214. The electronic device displays an interface 1200, and the interface 1200 includes a first sub-display area 1201 and a second sub-display area 1202. The first sub-image 1211 is displayed in the first sub-display area 1201, the second sub-image 1212 is displayed in the second sub-display area 1202, and the third sub-image 1213 and the fourth sub-image 1214 are respectively arranged after the second sub-image 1212 and wait to be displayed. In this case, the user may slide the interface 1200 leftward. In response to the sliding operation of the user, the first sub-image 1211 moves out of the interface 1200, the second sub-image 1212 is displayed in the first sub-display area 1201, and the third sub-image 1213 is displayed in the second sub-display area 1202. The fourth sub-image 1214 is arranged after the third sub-image 1213 and waits to be displayed.

Optionally, the user may further perform a tap operation on the interface of the electronic device, to browse the sub-images displayed in the sub-display areas. For example, the user may tap any sub-image displayed on the interface of the electronic device. In response to the operation of the user, the electronic device may determine a sub-image selected by the user, and the sub-image selected by the user may be focused. Then, the user may perform an operation on the selected sub-image. For example, the user may tap the selected sub-image, or the user may perform a zoom-in operation on the selected sub-image by using a multi-finger gesture. In response to the operation of the user, the electronic device may enlarge and display the sub-image selected by the user (for example, the enlarged display may be a full-screen display). Therefore, the user can browse details of the sub-image.

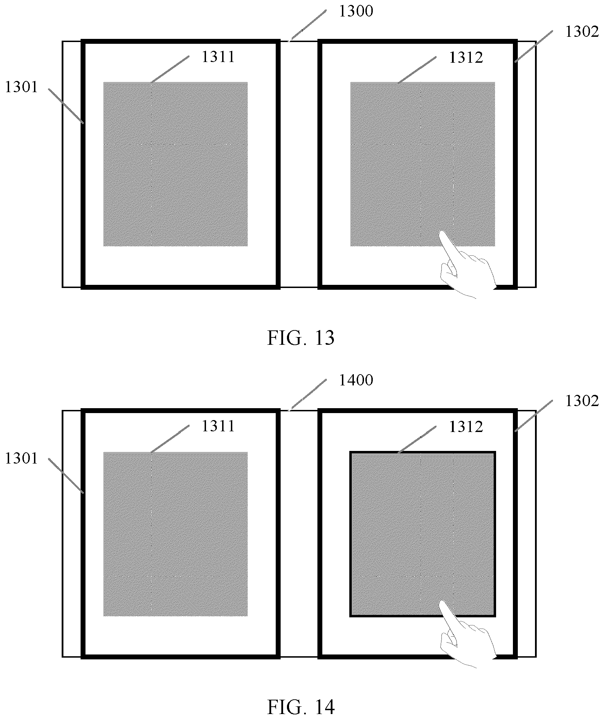

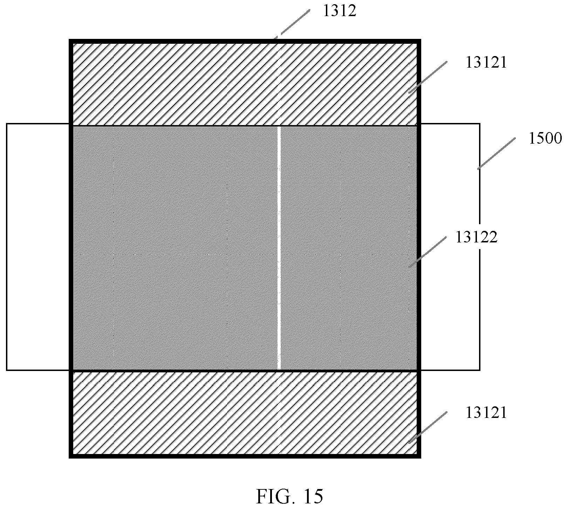

Description is provided with reference to FIG. 13 to FIG. 15. As shown in FIG. 13, the electronic device displays an interface 1300. The interface 1300 includes a first sub-display area 1301 and a second sub-display area 1302. The first sub-display area 1301 displays a first sub-image 1311. The second sub-display area 1302 displays a second sub-image 1312. In this case, the user may perform an operation (for example, tap the second sub-image 1312) on the second sub-image 1312. In response to the tap operation of the user, the second sub-image 1312 is focused, and the interface 1400 shown in FIG. 14 may be obtained. As shown in FIG. 14, the interface 1400 includes the first sub-display area 1301 and the second sub-display area 1302. The first sub-display area 1301 displays the first sub-image 1311, the second sub-display area 1302 displays the second sub-image 1312, and the second sub-image 1312 is in a focused state. Then, the user may perform an operation (for example, tap or slide with multiple fingers) on the second sub-image 1312 in the focused state, to zoom in and display the second sub-image 1312. In response to the operation of the user, the electronic device may zoom in the second sub-image 1312 for display, to obtain an interface 1500 shown in FIG. 15. During specific implementation, the second sub-image 1312 may be displayed in full screen according to a screen size of the electronic device, so that a resolution of the second sub-image 1312 may adapt to the screen size of the electronic device, to improve viewing experience of the user. As shown in FIG. 15, the interface 1500 includes the enlarged second sub-image 1312. Because the enlarged second sub-image 1312 may not be completely displayed on the screen of the electronic device, the enlarged second sub-image 1312 may include invisible areas 13121 and a visible area 13122. The user may zoom (for example, zoom out or zoom in) or slide (for example, slide up or slide down) to further browse the invisible areas 13121 and the visible area 13122.

If the electronic device determines that the second display area displays the to-be-displayed image, the user may transpose the electronic device. For example, the user may vertically set the electronic device in the landscape mode to the portrait mode, or the user may horizontally set the electronic device in the portrait mode to the landscape mode. An example in which the electronic device is in the landscape mode is used for description. If the to-be-displayed image is a long horizontal image, the electronic device may determine to display the to-be-displayed image in the second display area. In this case, the user may vertically set the electronic device to the portrait mode. Because the portrait mode does not match the long horizontal image, the long horizontal image may be segmented and displayed. For a specific process of segmenting and displaying, reference may be made to step 203 to step 205. Details are not described herein again.

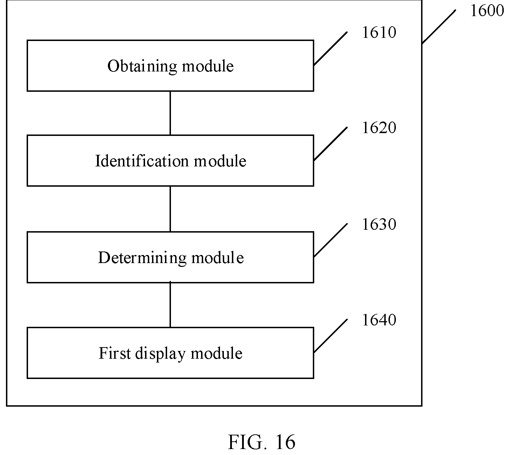

FIG. 16 is a schematic diagram of a structure of an embodiment of an image display apparatus according to this application. As shown in FIG. 16, the image display apparatus 1600 may include an obtaining module 1610, an identification module 1620, a determining module 1630, and a first display module 1640.

The obtaining module 1610 is configured to obtain a to-be-displayed image.

The identification module 1620 is configured to identify the to-be-displayed image, and determine a display type of the to-be-displayed image.

The determining module 1630 is configured to obtain a screen status of the electronic device, determine whether the screen status of the electronic device matches the display type of the to-be-displayed image, and determine a display area based on a matching result.

The first display module 1640 is configured to: if the screen status of the electronic device does not match the display type of the to-be-displayed image, segment the to-be-displayed image to obtain a plurality of sub-images, and display the plurality of sub-images in the display area.

In a possible implementation, the identification module 1620 includes an obtaining unit 1621, a comparison unit 1622, and an identification unit 1623.

The obtaining unit 1621 is configured to obtain an aspect ratio of the to-be-displayed image.

The comparison unit 1622 is configured to compare the aspect ratio of the to-be-displayed image with a preset first threshold and a preset second threshold, where the preset first threshold and the second threshold are determined based on screen resolution of the electronic device.

The identification unit 1623 is configured to: if the aspect ratio of the to-be-displayed image is greater than or equal to the preset first threshold, determine that the display type of the to-be-displayed image is a long vertical image; or if the aspect ratio of the to-be-displayed image is less than or equal to the preset second threshold, determine that the display type of the to-be-displayed image is a long horizontal image.

In a possible implementation, the screen status of the electronic device includes a landscape mode and a portrait mode. The determining module 1630 is further configured to: if the screen status of the electronic device is the landscape mode, and the display type of the to-be-displayed image is the long vertical image; or if the screen status of the electronic device is the portrait mode, and the display type of the to-be-displayed image is the long horizontal image, determine that the screen status of the electronic device does not match the display type of the to-be-displayed image, determine that a screen of the electronic device is a first display area, and segment the first display area to obtain a plurality of sub-display areas.

If the screen status of the electronic device is the landscape mode, and the display type of the to-be-displayed image is the long horizontal image; or if the screen status of the electronic device is the portrait mode, and the display type of the to-be-displayed image is the long vertical image, it is determined that the screen status of the electronic device matches the display type of the to-be-displayed image, and that a screen of the electronic device is a second display area.

In a possible implementation, the apparatus 1600 further includes a second display module 1650.

The second display module 1650 is configured to: if the screen status of the electronic device matches the display type of the to-be-displayed image, display the to-be-displayed image in the second display area.

In a possible implementation, the determining module 1630 is further configured to: if the screen status of the electronic device is the landscape mode, and the display type of the to-be-displayed image is the long vertical image, obtain width of the screen of the electronic device and width of the to-be-displayed image; and segment the first display area to obtain the plurality of sub-display areas based on a ratio of the width of the screen of the electronic device to the width of the to-be-displayed image.

If the screen status of the electronic device is the portrait mode, and the display type of the to-be-displayed image is the long horizontal image, obtain a height of the screen of the electronic device and a height of the to-be-displayed image; and segment the first display area to obtain the plurality of sub-display areas based on a ratio of the height of the screen of the electronic device to the height of the to-be-displayed image.

In a possible implementation, the first display module 1640 is further configured to display the plurality of sub-images in the plurality of sub-display areas.

In a possible implementation, the determining module 1630 is further configured to evenly segment the to-be-displayed image based on a total quantity of the sub-display areas, to obtain a plurality of sub-images of a same size.

In a possible implementation, the determining module 1630 is further configured to unevenly segment the to-be-displayed image to obtain a plurality of sub-images of different sizes.

In a possible implementation, the apparatus 1600 further includes a third display module 1660.

The third display module 1660 is configured to: in response to a first operation of a user, perform re-segmentation on the to-be-displayed image, and display, in the plurality of sub-display areas, a plurality of sub-images obtained after the re-segmentation.

In a possible implementation, the apparatus further includes a fourth display module 1670.

The fourth display module 1670 is configured to: in response to a second operation of a user, determine that the screen of the electronic device is the first display area, and segment the first display area to obtain the plurality of sub-display areas; and segment the to-be-displayed image to obtain a plurality of sub-images, and display the plurality of sub-images in the plurality of sub-display areas.

The image display apparatus provided in the embodiment shown in FIG. 16 may be configured to perform the technical solutions of the method embodiments shown in FIG. 1 to FIG. 15 in this application. For implementation principles and technical effects thereof, refer to related descriptions in the method embodiments.

It should be understood that division into the foregoing modules of the image display apparatus shown in FIG. 16 is merely logical function division. In an actual implementation, all or some of the modules may be integrated into one physical entity, or may be physically separated. In addition, all of the modules may be implemented in a form of software invoked by using a processing element or may be implemented in a form of hardware. Alternatively, some modules may be implemented in the form of software invoked by using the processing element, and some modules are implemented in the form of hardware. For example, a detection module may be a separately disposed processing element, or may be integrated into a chip of the electronic device for implementation. The implementation of other modules is similar to the detection module. In addition, all or some of these modules may be integrated together, or may be implemented independently. In an implementation process, the steps of the foregoing methods or the foregoing modules may be completed by using an integrated logic circuit of hardware in a processor element or instructions in a form of software.

For example, the foregoing modules may be one or more integrated circuits configured to implement the foregoing method, for example, one or more application-specific integrated circuits (Application-Specific Integrated Circuits; ASICs for short), or one or more digital signal processors (Digital Signal Processors; DSPs for short) or one or more field programmable gate arrays (Field Programmable Gate Array; FPGA for short) and the like. For another example, these modules can be integrated together and implement in a form of system-on-a-chip (System-On-a-Chip; hereinafter referred to as SOC).

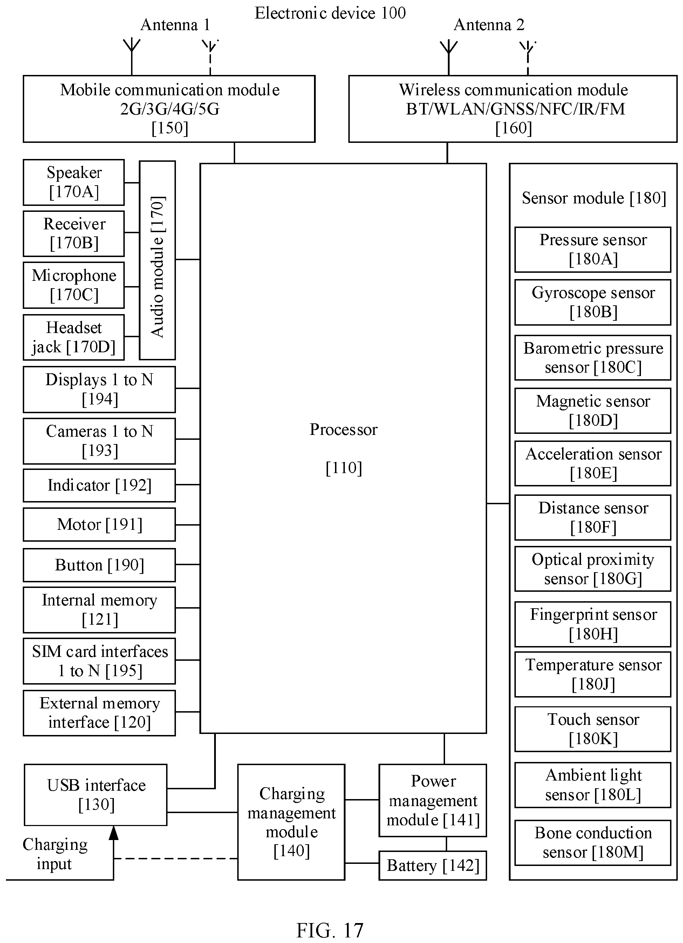

FIG. 17 is an example of a schematic diagram of a structure of an electronic device 100.

The electronic device 100 may include a processor 110, an external memory interface 120, an internal memory 121, a universal serial bus (universal serial bus, USB) interface 130, a charging management module 150, a power management module 141, a battery 142, an antenna 1, an antenna 2, a mobile communication module 150, and a wireless communication module 160, an audio module 170, a speaker 170A, a receiver 170B, a microphone 170C, a headset interface 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, and a touch sensor 180K, an ambient light sensor 180L, bone conduction sensor 180M, etc.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The illustrated components may be implemented in hardware, software, or a combination of software and hardware.

The processor 110 may include one or more processing units. For example, the processor 110 may include an application processor (application processor, AP), a modem processor, a graphics processing unit (graphics processing unit, GPU), and an image signal processor (image signal processor, ISP), a controller, a video codec, a digital signal processor (digital signal processor, DSP), a baseband processor, and/or a neural-network processing unit (neural-network processing unit, NPU), or the like. Different processing units may be independent components, or may be integrated into one or more processors. The controller may be a nerve center and a command center of the electronic device 200. The controller may generate an operation control signal based on an instruction operation code and a time sequence signal, to complete control of instruction reading and instruction execution.

A memory may be further disposed in the processor 110, configured to store instructions and data. In some embodiments, the memory in the processor 110 is a cache memory. The memory may store instructions or data that is just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

Execution of the application sharing method provided in this embodiment of this application may be controlled by the processor 110 or completed by invoking another component, for example, invoking a processing program in this embodiment of this application stored in the internal memory 121, or invoking, by using the external memory interface 120, a processing program in this embodiment of this application stored in a third-party device, to control the wireless communication module 160 to perform data communication with another electronic device, to implement application sharing among a plurality of electronic devices and improve user experience.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus that includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flashlight, a camera 193, and the like through different I2C bus interfaces. For example, the processor 110 may be coupled to the touch sensor 180K through an I2C interface, so that the processor 110 communicates with the touch sensor 180K through an I2C bus interface, to implement a touch function of the electronic device 100.

The I2S interface can be used for audio communication. In some embodiments, the processor 110 may include a plurality of groups of I2S buses. The processor 110 may be coupled to the audio module 170 through an I2S bus, to implement communication between the processor 110 and the audio module 170. In some embodiments, the audio module 170 may transmit an audio signal to the wireless communication module 160 through an I2S interface, to implement a function of answering a call through a Bluetooth headset.

A PCM interface can also be used for audio communication, and perform sampling, quantizing, and encoding on analog signals. In some embodiments, the audio module 170 and the wireless communication module 160 may be coupled through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be used for audio communication.

A UART interface is a universal serial data bus for asynchronous communication. The bus may be a bidirectional communication bus. It converts data to be transmitted between serial communication and parallel communication. In some embodiments, the UART interface is generally used to connect the processor 110 and the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music by using a Bluetooth headset.

An MIPI interface may be used to connect the processor 110 to peripheral devices such as a display 194 and the camera 193. The MIPI interface includes a camera serial interface (camera serial interface, CSI), a display serial interface (display serial interface, DSI), and the like. In some embodiments, the processor 110 and the camera 193 communicate with each other through a CSI interface, to implement an image shooting function of the electronic device 100. The processor 110 communicates with the display 194 through a DSI interface, to implement a display function of the electronic device 100.

A GPIO interface can be configured by software. The GPIO interface can be configured as a control signal or a data signal. In some embodiments, the GPIO interface may be configured to connect the processor 110 to the camera 193, the display 194, the wireless communication module 160, the audio module 170, the sensor module 180, and the like. The GPIO interface can also be configured as the I2C interface, the I2S interface, the UART interface, the MIPI interface, or the like.

A USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device. It can also be used to connect to a headset and play audio through the headset. The interface may alternatively be configured to connect to another electronic device such as an AR device.

It may be understood that an interface connection relationship between the modules shown in this embodiment of this application is merely an example for description, and does not constitute a limitation on the structure of the electronic device 100. In some other embodiments of this application, the electronic device 100 may alternatively use different interface connection manners or a combination of a plurality of interface connection manners in the foregoing embodiment.

A wireless communication function of the electronic device 100 may be implemented through an antenna 1, an antenna 2, a mobile communication module 150, a wireless communication module 160, a modem processor, a baseband processor, and the like.

The antenna 1 and the antenna 2 are configured to transmit and receive electromagnetic wave signals. Each antenna in the electronic device 100 may be configured to cover one or more communication frequency bands. Different antennas may be further multiplexed to improve antenna utilization. For example, the antenna 1 may be multiplexed as a diversity antenna of a wireless local area network. In other embodiments, the antenna may be used in combination with a tuning switch.

The mobile communication module 150 may provide a wireless communication solution that is applied to the electronic device 100 and includes a 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify the signal modulated by the modem processor, and convert the signal into an electromagnetic wave through the antenna 1. In some embodiments, at least some functional modules of the mobile communication module 150 may be disposed in the processor 110. In some embodiments, at least some functional modules of the mobile communication module 150 and at least some modules of the processor 110 may be disposed in a same component.

The modem processor may include a modulator and a demodulator. The modulator is configured to modulate a to-be-sent low-frequency baseband signal into a medium-high frequency signal. The demodulator is configured to demodulate the received electromagnetic wave signal into the low-frequency baseband signal. Then, the demodulator transmits the demodulated low-frequency baseband signal to the baseband processor for processing. The low-frequency baseband signal is processed by the baseband processor and then transferred to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same component as the mobile communication module 150 or another functional module.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components that integrate at least one communication processing module. The wireless communication module 160 receives an electromagnetic wave signal through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave through the antenna 2.

In some embodiments, the antenna 1 of the electronic device 100 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, the WLAN, the NFC, the FM, the IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function by using a GPU, the display 194, the application processor, or the like. The GPU is a microprocessor for image processing, and is connected to the display 194 and the application processor. The GPU is used to perform mathematical and geometric calculations, and render an image. The processor 110 may include one or more GPUs that execute program instructions to generate or change display information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

In this embodiment of this application, the electronic device 100 may display a user interface through the display 194.

The electronic device 100 may implement an image shooting function by using the ISP, the camera 193, the video codec, the GPU, the display 194, the application processor, or the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a shooting scenario. In some embodiments, the ISP may be disposed in the camera 193.

The camera 193 is used to capture a static image or a video. An object is projected to the photosensitive element by generating an optical image through the lens. The photosensitive element may be a charge coupled device (charge coupled device, CCD) or a complementary metal-oxide-semiconductor (complementary metal-oxide-semiconductor, CMOS) phototransistor. The photosensitive element converts the optical signal into an electrical signal, and then transmits the electrical signal to the ISP to convert it into a digital image signal. The ISP outputs the digital image signal to the DSP for processing. The DSP converts the digital image signal into a standard RGB and YUV image signal. In some embodiments, the electronic device 100 may include one or N cameras 193, where N is a positive integer greater than 1.

The digital signal processor is configured to process digital signals, and may process other digital signals in addition to digital image signals. For example, when the electronic device 100 selects a frequency, the digital signal processor is configured to perform Fourier transformation on frequency energy.

The video codec is used to compress or decompress digital video. The electronic device 100 may support one or more video codecs. In this way, the electronic device 100 may play or record videos in a plurality of encoding formats, for example, moving picture experts group (moving picture experts group, MPEG) 1, MPEG 2, MPEG 3, and MPEG 4.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be configured to connect to an external memory card, for example, a micro SD card, to expand a storage capability of the electronic device 100. The external memory card communicates with the processor 110 through the external memory interface 120, to implement a data storage function. For example, files such as music and videos can be saved on the external memory card.

The internal memory 121 may be configured to store computer-executable program code, and the executable program code includes instructions. The internal memory 121 may include a program storage area and a data storage area. The program storage area may store an operating system, an application required by at least one function (for example, a sound playing function or an image playing function), and the like. The data storage area may store data (such as audio data and a phone book) created in a process of using the electronic device 100. In addition, the internal memory 121 may include a high-speed random access memory, or may include a nonvolatile memory, for example, at least one magnetic disk storage device, a flash storage device, a universal flash storage (universal flash storage, UFS), or the like. The processor 110 runs instructions stored in the internal memory 121 and/or instructions stored in the memory disposed in the processor, to perform various function applications and data processing of the electronic device 100.

The electronic device 100 may implement an audio function by using the audio module 170, the speaker 170A, the receiver 170B, the microphone 170C, the headset jack 170D, the application processor, and the like. For example, music playback, recording, and etc.

The touch sensor 180K may also be referred to as a "touch panel". The touch sensor 180K may be disposed on the display 194, and the touch sensor 180K and the display 194 constitute a touchscreen, which is also referred to as a "touchscreen". The touch sensor 180K is configured to detect a touch operation acting on or near the touch sensor 180K. The touch sensor may transfer the detected touch operation to the application processor to determine a touch event type. Visual output related to touch operations may be provided through the display 194. In some other embodiments, the touch sensor 180K may also be disposed on a surface of the electronic device 100 at a location different from that of the display 194.

In this embodiment of this application, the electronic device 100 may receive an operation of the user by using the touch sensor 180K, for example, an operation such as clicking, double-clicking, or sliding.

The button 190 includes a power-on button, a volume button, and the like. The button 190 may be a mechanical button. It can also be a touch button. The electronic device 100 may receive a button input, and generate a button signal input related to a user setting and function control of the electronic device 100.

The motor 191 may generate a vibration prompt. The motor 191 may be used for an incoming call vibration prompt and a touch vibration feedback. For example, touch operations performed on different applications (such as a photographing application and an audio playing application) may correspond to different vibration feedback effects. The motor 191 may also correspond to different vibration feedback effects for touch operations performed on different areas of the display 194. Different application scenarios (for example, a time reminder, information receiving, an alarm clock, a game) may also correspond to different vibration feedback effects. The touch vibration feedback effect can also be customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195, or removed from the SIM card interface 195, to implement contact and separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into the same SIM card interface 195 at the same time. Types of the plurality of cards may be the same or different. The SIM card interface 195 may also be compatible with different types of SIM cards. The SIM card interface 195 may also be compatible with an external memory card. The electronic device 100 interacts with a network through the SIM card, to implement functions such as calling and data communication. In some embodiments, the electronic device 100 uses an eSIM, that is, an embedded SIM card. The eSIM card may be embedded in the electronic device 100, and cannot be separated from the electronic device 100.

It may be understood that an interface connection relationship between the modules shown in this embodiment of this application is merely an example for description, and does not constitute a limitation on the structure of the electronic device 100. In some other embodiments of this application, the electronic device 100 may alternatively use different interface connection manners or a combination of a plurality of interface connection manners in the foregoing embodiment.

It may be understood that, to implement the foregoing functions, the electronic device 100 includes a corresponding hardware structure and/or a corresponding software module for performing each function. A person skilled in the art should be easily aware that, in combination with the examples described in embodiments disclosed in this specification, units, algorithms, and steps may be implemented by hardware or a combination of hardware and computer software in embodiments of this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of embodiments of this application.

Functional module division may be performed on the foregoing electronic device 100 based on the foregoing method examples in embodiments of this application. For example, the functional modules may be obtained through division based on to the corresponding functions, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

Based on descriptions about the foregoing implementations, a person skilled in the art may clearly understand that, for a purpose of convenient and brief description, division into the foregoing functional modules is used as an example for illustration. In actual application, the foregoing functions may be allocated to different functional modules and implemented according to a requirement. In other words, an inner structure of an apparatus is divided into different functional modules to implement all or some of the functions described above. For a detailed working process of the foregoing system, apparatus, and unit, refer to a corresponding process in the foregoing method embodiments, and details are not described herein again.

Functional units in each of embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of embodiments of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) or a processor to perform all or some of the steps of the methods described in embodiments of this application. The foregoing storage medium includes any medium that can store program code, such as a flash memory, a removable hard disk, a read-only memory, a random access memory, a magnetic disk, or an optical disc.

## Claims

1. An image display method, applied to an electronic device (100), wherein the method comprises:
obtaining (101, 201) a to-be-displayed image;
identifying (101, 201) the to-be-displayed image, and determining (101, 201) a display type of the to-be-displayed image;
obtaining a screen status of the electronic device (100), and determining (102, 202) whether the screen status of the electronic device (100) matches the display type of the to-be-displayed image;
determining a display area based on a matching result;
if the screen status of the electronic device (100) does not match the display type of the to-be-displayed image, segmenting (104, 204) the to-be-displayed image to obtain a plurality of sub-images, and displaying the plurality of sub-images in the display area;
wherein the identifying (101, 201) the to-be-displayed image, and determining (101, 201) a display type of the to-be-displayed image comprises:
obtaining an aspect ratio of the to-be-displayed image;
comparing the aspect ratio of the to-be-displayed image with a preset first threshold (I₁) and a preset second threshold (I₂), wherein the preset first threshold (I₁) and the preset second threshold (I₂) are determined based on screen resolution of the electronic device (100); and
if the aspect ratio of the to-be-displayed image is greater than or equal to the preset first threshold (I₁), determining that the display type of the to-be-displayed image is a long vertical image; or
if the aspect ratio of the to-be-displayed image is less than or equal to the preset second threshold (I₂), determining that the display type of the to-be-displayed image is a long horizontal image; and
wherein the screen status of the electronic device (100) comprises a landscape mode and a portrait mode, and the determining a display area based on a matching result comprises:
if the screen status of the electronic device is the landscape mode, and the display type of the to-be-displayed image is the long vertical image; or if the screen status of the electronic device is the portrait mode, and the display type of the to-be-displayed image is the long horizontal image, determining that the screen status of the electronic device (100) does not match the display type of the to-be-displayed image, determining that a screen of the electronic device (100) is a first display area, and segmenting the first display area to obtain a plurality of sub-display areas; or
if the screen status of the electronic device (100) is the landscape mode, and the display type of the to-be-displayed image is the long horizontal image; or if the screen status of the electronic device (100) is the portrait mode, and the display type of the to-be-displayed image is the long vertical image, determining that the screen status of the electronic device (100) matches the display type of the to-be-displayed image, and determining that a screen of the electronic device (100) is a second display area.

2. The method according to claim 1, wherein the method further comprises:
if the screen status of the electronic device (100) matches the display type of the to-be-displayed image, displaying the to-be-displayed image in the second display area.

3. The method according to claim 1, wherein the segmenting the first display area to obtain a plurality of sub-display areas comprises:
if the screen status of the electronic device (100) is the landscape mode, and the display type of the to-be-displayed image is the long vertical image, obtaining a width (w₁) of the screen of the electronic device (100) and a width (w₂) of the to-be-displayed image; and segmenting the first display area to obtain the plurality of sub-display areas based on a ratio of the width (w₁) of the screen of the electronic device (100) to the width (w₂) of the to-be-displayed image; or
if the screen status of the electronic device (100) is the portrait mode, and the display type of the to-be-displayed image is the long horizontal image, obtaining a height (h₁) of the screen of the electronic device (100) and a height (h₂) of the to-be-displayed image; and segmenting the first display area to obtain the plurality of sub-display areas based on a ratio of the height (h₁) of the screen of the electronic device (100) to the height (h₂) of the to-be-displayed image.

4. The method according to claim 1, wherein the displaying the plurality of sub-images in the display area comprises:
displaying the plurality of sub-images in the plurality of sub-display areas.

5. The method according to claim 1, wherein the segmenting (104, 204) the to-be-displayed image to obtain a plurality of sub-images comprises:
evenly segmenting the to-be-displayed image (104) based on a total quantity of the sub-display areas, to obtain a plurality of sub-images of a same size.

6. The method according to claim 1, wherein the segmenting (104, 204) the to-be-displayed image to obtain a plurality of sub-images comprises:
unevenly segmenting the to-be-displayed image (204) to obtain a plurality of sub-images of different sizes.

7. The method according to claim 1, wherein after the displaying the plurality of sub-images in the display area, the method further comprises:
in response to a first operation of a user, performing re-segmentation on the to-be-displayed image, and displaying, in the plurality of sub-display areas, a plurality of sub-images obtained after the re-segmentation.

8. The method according to claim 2, wherein after the displaying the to-be-displayed image in the second display area, the method further comprises:
in response to a second operation of a user, determining that the screen of the electronic device (100) is the first display area, and segmenting the first display area to obtain the plurality of sub-display areas; and
segmenting the to-be-displayed image to obtain the plurality of sub-images and displaying the plurality of sub-images in the plurality of sub-display areas.

9. An electronic device (100), comprising a memory (121), wherein the memory (121) is configured to store computer program code, the computer program code comprises instructions, and when the electronic device (100) reads the instructions from the memory, the electronic device (100) is enabled to perform a method according to any one of claims 1 to 8.

10. A computer-readable storage medium, comprising computer instructions, wherein when the computer instructions are run on an electronic device (100), the electronic device (100) is enabled to perform the method according to any one of claims 1 to 8.

11. A computer program product, wherein when the computer program product runs on a computer, the computer is enabled to perform the method according to any one of claims 1 to 8.

## Patentansprüche

1. Bildanzeigeverfahren, das auf eine elektronische Vorrichtung (100) angewendet wird, wobei das Verfahren Folgendes umfasst:
Erlangen (101, 201) eines anzuzeigenden Bildes;
Identifizieren (101, 201) des anzuzeigenden Bildes und Bestimmen (101, 201) eines Anzeigetyps des anzuzeigenden Bildes;
Erlangen eines Bildschirmstatus der elektronischen Vorrichtung (100) und Bestimmen (102, 202), ob der Bildschirmstatus der elektronischen Vorrichtung (100) mit dem Anzeigetyp des anzuzeigenden Bildes übereinstimmt;
Bestimmen eines Anzeigebereichs basierend auf einem übereinstimmenden Ergebnis;
sofern der Bildschirmstatus der elektronischen Vorrichtung (100) nicht mit dem Anzeigetyp des anzuzeigenden Bildes übereinstimmt, Segmentieren (104, 204) des anzuzeigenden Bildes, um eine Vielzahl von Teilbildern zu erlangen, und Anzeigen der Vielzahl von Teilbildern in dem Anzeigebereich;
wobei das Identifizieren (101, 201) des anzuzeigenden Bildes und Bestimmen (101, 201) eines Anzeigetyps des anzuzeigenden Bildes Folgendes umfasst:
Erlangen des Seitenverhältnisses des anzuzeigenden Bildes;
Vergleichen des Seitenverhältnisses des anzuzeigenden Bildes mit einem ersten voreingestellten Schwellenwert (I₁) und einem zweiten voreingestellten Schwellenwert (I₂), wobei der erste voreingestellte Schwellenwert (I₁) und der zweite voreingestellte Schwellenwert (I₂) basierend auf einer Bildschirmauflösung der elektronischen Vorrichtung (100) bestimmt werden; und
sofern das Seitenverhältnis des anzuzeigenden Bildes größer oder gleich dem ersten voreingestellten Schwellenwert (I₁) ist, Bestimmen, dass der Anzeigetyp des anzuzeigenden Bildes ein langes vertikales Bild ist; oder
sofern das Seitenverhältnis des anzuzeigenden Bildes kleiner oder gleich dem zweiten voreingestellten Schwellenwert (I₂) ist, Bestimmen, dass der Anzeigetyp des anzuzeigenden Bildes ein langes horizontales Bild ist; und
wobei der Bildschirmstatus der elektronischen Vorrichtung (100) einen Querformatmodus und einen Hochformatmodus umfasst, und das Bestimmen eines Anzeigebereichs basierend auf einem übereinstimmenden Ergebnis Folgendes umfasst:
sofern der Bildschirmstatus der elektronischen Vorrichtung der Querformatmodus ist und der Anzeigetyp des anzuzeigenden Bildes das lange vertikale Bild ist; oder sofern der Bildschirmstatus der elektronischen Vorrichtung der Hochformatmodus ist und der Anzeigetyp des anzuzeigenden Bildes das lange horizontale Bild ist, Bestimmen, dass der Bildschirmstatus der elektronischen Vorrichtung (100) nicht mit dem Anzeigetyp des anzuzeigenden Bildes übereinstimmt, Bestimmen, dass ein Bildschirm der elektronischen Vorrichtung (100) ein erster Anzeigebereich ist, und Segmentieren des ersten Anzeigebereichs, um eine Vielzahl von Teilanzeigebereichen zu erlangen; oder
sofern der Bildschirmstatus der elektronischen Vorrichtung (100) der Querformatmodus ist und der Anzeigetyp des anzuzeigenden Bildes das lange horizontale Bild ist; oder sofern der Bildschirmstatus der elektronischen Vorrichtung (100) der Hochformatmodus ist und der Anzeigetyp des anzuzeigenden Bildes das lange vertikale Bild ist, Bestimmen, dass der Bildschirmstatus der elektronischen Vorrichtung (100) mit dem Anzeigetyp des anzuzeigenden Bildes übereinstimmt, und Bestimmen, dass ein Bildschirm der elektronischen Vorrichtung (100) ein zweiter Anzeigebereich ist.

2. Verfahren nach Anspruch 1, wobei das Verfahren ferner Folgendes umfasst:
sofern der Bildschirmstatus der elektronischen Vorrichtung (100) mit dem Anzeigetyp des anzuzeigenden Bildes übereinstimmt, Anzeigen des anzuzeigenden Bildes in dem zweiten Anzeigebereich.

3. Verfahren nach Anspruch 1, wobei das Segmentieren des ersten Anzeigebereichs, um eine Vielzahl von Teilanzeigebereichen zu erlangen, Folgendes umfasst:
sofern der Bildschirmstatus der elektronischen Vorrichtung (100) der Querformatmodus ist und der Anzeigetyp des anzuzeigenden Bildes das lange vertikale Bild ist, Erlangen einer Breite (w₁) des Bildschirms der elektronischen Vorrichtung (100) und einer Breite (w₂) des anzuzeigenden Bildes; und Segmentieren des ersten Anzeigebereichs, um die Vielzahl von Teilanzeigebereichen basierend auf einem Verhältnis der Breite (w₁) des Bildschirms der elektronischen Vorrichtung (100) zu der Breite (w₂) des anzuzeigenden Bildes zu erlangen; oder
sofern der Bildschirmstatus der elektronischen Vorrichtung (100) der Hochformatmodus ist und der Anzeigetyp des anzuzeigenden Bildes das lange horizontale Bild ist, Erlangen einer Höhe (h₁) des Bildschirms der elektronischen Vorrichtung (100) und einer Höhe (h₂) des anzuzeigenden Bildes; und Segmentieren des ersten Anzeigebereichs, um die Vielzahl von Teilanzeigebereichen basierend auf einem Verhältnis der Höhe (h₁) des Bildschirms der elektronischen Vorrichtung (100) zu der Höhe (h₂) des anzuzeigenden Bildes zu erlangen.

4. Verfahren nach Anspruch 1, wobei das Anzeigen der Vielzahl von Teilbildern in dem Anzeigebereich Folgendes umfasst:
Anzeigen der Vielzahl von Teilbildern in der Vielzahl von Teilanzeigebereichen.

5. Verfahren nach Anspruch 1, wobei das Segmentieren (104, 204) des anzuzeigenden Bildes, um eine Vielzahl von Teilbildern zu erlangen, Folgendes umfasst:
gleichmäßiges Segmentieren des anzuzeigenden Bildes (104) basierend auf einer Gesamtzahl der Teilanzeigebereiche, um eine Vielzahl von Teilbildern derselben Größe zu erlangen.

6. Verfahren nach Anspruch 1, wobei das Segmentieren (104, 204) des anzuzeigenden Bildes, um eine Vielzahl von Teilbildern zu erlangen, Folgendes umfasst:
ungleichmäßiges Segmentieren des anzuzeigenden Bildes (204), um eine Vielzahl von Teilbildern unterschiedlicher Größen zu erlangen.

7. Verfahren nach Anspruch 1, wobei das Verfahren nach dem Anzeigen der Vielzahl von Teilbildern in dem Anzeigebereich ferner Folgendes umfasst:
als Reaktion auf eine erste Operation des Benutzers, Durchführen einer Neusegmentierung an dem anzuzeigenden Bild und Anzeigen einer Vielzahl von Teilbildern, die nach der Neusegmentierung erlangt werden, in der Vielzahl von Teilanzeigebereichen.

8. Verfahren nach Anspruch 2, wobei das Verfahren nach dem Anzeigen des anzuzeigenden Bildes in dem zweiten Anzeigebereich ferner Folgendes umfasst:
als Reaktion auf eine zweite Operation des Benutzers, Bestimmen, dass der Bildschirm der elektronischen Vorrichtung (100) der erste Anzeigebereich ist, und Segmentieren des ersten Anzeigebereichs, um die Vielzahl von Teilanzeigebereichen zu erlangen; und
Segmentieren des anzuzeigenden Bildes, um die Vielzahl von Teilbildern zu erlangen, und Anzeigen der Vielzahl von Teilbildern in der Vielzahl von Teilanzeigebereichen.

9. Elektronische Vorrichtung (100), umfassend einen Speicher (121), wobei der Speicher (121) dazu konfiguriert ist, einen Computerprogrammcode zu speichern, der Computerprogrammcode Anweisungen umfasst und, wenn die elektronische Vorrichtung (100) die Anweisungen aus dem Speicher liest, die elektronische Vorrichtung (100) in die Lage versetzt wird, ein Verfahren nach einem der Ansprüche 1 bis 8 durchzuführen.

10. Computerlesbares Speichermedium, umfassend Computeranweisungen, wobei, wenn die Computeranweisungen auf einer elektronischen Vorrichtung (100) ausgeführt werden, die elektronische Vorrichtung (100) in die Lage versetzt wird, das Verfahren nach einem der Ansprüche 1 bis 8 durchzuführen.

11. Computerprogrammprodukt, wobei, wenn das Computerprogrammprodukt auf einem Computer läuft, der Computer in die Lage versetzt wird, das Verfahren nach einem der Ansprüche 1 bis 8 durchzuführen.

## Revendications

1. Procédé d'affichage d'image, appliqué à un dispositif électronique (100), dans lequel le procédé comprend :
l'obtention (101, 201) d'une image à afficher ;
l'identification (101, 201) de l'image à afficher et la détermination (101, 201) d'un type d'affichage de l'image à afficher ;
l'obtention d'un état d'écran du dispositif électronique (100) et le fait de déterminer (102, 202) si l'état d'écran du dispositif électronique (100) correspond au type d'affichage de l'image à afficher ;
la détermination d'une zone d'affichage sur la base d'un résultat correspondant ;
si l'état d'écran du dispositif électronique (100) ne correspond pas au type d'affichage de l'image à afficher, la segmentation (104, 204) de l'image à afficher pour obtenir une pluralité de sous-images et l'affichage de la pluralité de sous-images dans la zone d'affichage ;
dans lequel l'identification (101, 201) de l'image à afficher et la détermination (101, 201) d'un type d'affichage de l'image à afficher comprend :
l'obtention d'un format d'image de l'image à afficher ;
la comparaison du format d'image de l'image à afficher avec un premier seuil prédéfini (I₁) et un second seuil prédéfini (I₂), dans lequel le premier seuil prédéfini (I₁) et le second seuil prédéfini (I₂) sont déterminés sur la base de la résolution d'écran du dispositif électronique (100) ; et
si le format d'image de l'image à afficher est supérieur ou égal au premier seuil prédéfini (I₁), le fait de déterminer que le type d'affichage de l'image à afficher est une image verticale allongée ; ou
si le format d'image de l'image à afficher est inférieur ou égal au second seuil prédéfini (I₂), le fait de déterminer que le type d'affichage de l'image à afficher est une image horizontale allongée ; et
dans lequel l'état d'écran du dispositif électronique (100) comprend un mode paysage et un mode portrait, et la détermination d'une zone d'affichage sur la base d'un résultat de correspondance comprend :
si l'état d'écran du dispositif électronique est en mode paysage et que le type d'affichage de l'image à afficher est l'image verticale allongée ; ou si l'état d'écran du dispositif électronique est en mode portrait et que le type d'affichage de l'image à afficher est l'image horizontale allongée, le fait de déterminer que l'état d'écran du dispositif électronique (100) ne correspond pas au type d'affichage de l'image à afficher, le fait de déterminer qu'un écran du dispositif électronique (100) est une première zone d'affichage et la segmentation de la première zone d'affichage pour obtenir plusieurs sous-zones d'affichage ; ou
si l'état d'écran du dispositif électronique (100) est en mode paysage et que le type d'affichage de l'image à afficher est l'image horizontale allongée ; ou si l'état d'écran du dispositif électronique (100) est en mode portrait et que le type d'affichage de l'image à afficher est l'image verticale allongée, le fait de déterminer que l'état d'écran du dispositif électronique (100) correspond au type d'affichage de l'image à afficher, et le fait de déterminer qu'un écran du dispositif électronique (100) est une seconde zone d'affichage.

2. Procédé selon la revendication 1, dans lequel le procédé comprend également :
si l'état d'écran du dispositif électronique (100) correspond au type d'affichage de l'image à afficher, l'affichage de l'image à afficher dans la seconde zone d'affichage.

3. Procédé selon la revendication 1, dans lequel la segmentation de la première zone d'affichage pour obtenir une pluralité de sous-zones d'affichage comprend :
si l'état d'écran du dispositif électronique (100) est en mode paysage et que le type d'affichage de l'image à afficher est l'image verticale allongée, l'obtention d'une largeur (w₁) de l'écran du dispositif électronique (100) et d'une largeur (w₂) de l'image à afficher ; et la segmentation de la première zone d'affichage pour obtenir la pluralité de sous-zones d'affichage sur la base du rapport entre la largeur (w₁) de l'écran du dispositif électronique (100) et la largeur (w₂) de l'image à afficher ; ou
si l'état d'écran du dispositif électronique (100) est en mode portrait et que le type d'affichage de l'image à afficher est l'image horizontale allongée, l'obtention d'une hauteur (h₁) de l'écran du dispositif électronique (100) et d'une hauteur (h₂) de l'image à afficher ; et la segmentation de la première zone d'affichage pour obtenir la pluralité de sous-zones d'affichage sur la base du rapport entre la hauteur (h₁) de l'écran du dispositif électronique (100) et la hauteur (h₂) de l'image à afficher.

4. Procédé selon la revendication 1, dans lequel l'affichage de la pluralité de sous-images dans la zone d'affichage comprend : l'affichage de la pluralité de sous-images dans la pluralité de sous-zones d'affichage.

5. Procédé selon la revendication 1, dans lequel la segmentation (104, 204) de l'image à afficher pour obtenir une pluralité de sous-images comprend :
la segmentation uniforme de l'image à afficher (104) sur la base d'une quantité totale de sous-zones d'affichage, pour obtenir une pluralité de sous-images de même taille.

6. Procédé selon la revendication 1, dans lequel la segmentation (104, 204) de l'image à afficher pour obtenir une pluralité de sous-images comprend :
la segmentation uniforme de l'image à afficher (204) pour obtenir une pluralité de sous-images de tailles différentes.

7. Procédé selon la revendication 1, dans lequel après l'affichage de la pluralité de sous-images dans la zone d'affichage, le procédé comprend également :
en réponse à une première opération d'un utilisateur, la réalisation d'une nouvelle segmentation de l'image à afficher et l'affichage, dans la pluralité de sous-zones d'affichage, d'une pluralité de sous-images obtenues après la nouvelle segmentation.

8. Procédé selon la revendication 2, dans lequel, après l'affichage de l'image à afficher dans la seconde zone d'affichage, le procédé comprend également :
en réponse à une seconde opération de l'utilisateur, le fait de déterminer que l'écran du dispositif électronique (100) est la première zone d'affichage, et la segmentation de la première zone d'affichage pour obtenir la pluralité de sous-zones d'affichage ; et
la segmentation de l'image à afficher pour obtenir la pluralité de sous-images et l'affichage de la pluralité de sous-images dans la pluralité de sous-zones d'affichage.

9. Dispositif électronique (100), comprenant une mémoire (121), dans lequel la mémoire (121) est configurée pour stocker un code de programme informatique, le code de programme informatique comprend des instructions, et lorsque le dispositif électronique (100) lit les instructions à partir de la mémoire, le dispositif électronique (100) est activé pour réaliser un procédé selon l'une quelconque des revendications 1 à 8.

10. Support de stockage lisible par ordinateur, comprenant des instructions informatiques, dans lequel, lorsque les instructions informations sont exécutées sur un dispositif électronique (100), le dispositif électronique (100) est activé pour réaliser le procédé selon l'une quelconque des revendications 1 à 8.

11. Produit de programme informatique, dans lequel lorsque le produit de programme informatique s'exécute sur un ordinateur, l'ordinateur est activé pour réaliser le procédé selon l'une quelconque des revendications 1 à 8.
